# EUROPÄISCHE PATENTSCHRIFT

(11) **EP 3 972 917 B1**
(45) Veröffentlichungstag und Bekanntmachung des Hinweises auf die Patenterteilung: **06.09.2023**
(21) Anmeldenummer: 20736244.3
(22) Anmeldetag: 20.05.2020
(51) Int. Cl.: B65G 19/02, B65G 43/00, B65G 47/61

(54) **HÄNGEFÖRDERSYSTEM UND VERFAHREN ZUM BESTIMMEN DER DICKE EINER HÄNGETASCHE**
OVERHEAD CONVEYING SYSTEM AND METHOD FOR DETERMINING THE THICKNESS OF A HANGING BAG
SYSTÈME DE CONVOYEUR À SUSPENSION ET PROCÉDÉ POUR DÉTERMINER L'ÉPAISSEUR D'UNE POCHE SUSPENDUE

(30) Priorität: 22.05.2019 AT 504712019
(43) Veröffentlichungstag der Anmeldung: 30.03.2022
(73) Patentinhaber: TGW Mechanics GmbH, 4600 Wels (AT)
(72) Erfinder: REISCHL, Josef, 4623 Gunskirchen (AT)
(74) Vertreter: Burger, Hannes
(86) Internationale Anmeldenummer: PCT/AT2020/060207
(87) Internationale Veröffentlichungsnummer: WO 2020/232496

(56) Entgegenhaltungen:
- EP-A1- 3 147 405
- EP-A1- 3 543 181
- EP-A1- 3 575 243
- WO-A1-2020/089177
- DE-A1-102012 018 925
- DE-U1- 20 218 115
- DE-U1- 29 906 532
- JP-A- 2014 188 377
- US-A1- 2013 264 171

## Beschreibung

Die Erfindung betrifft ein Hängefördersystem mit Hängetaschen, welche jeweils einen zwischen einer Transportstellung und einer Beladestellung umstellbaren Taschenkörper aus einem biegeschlaffen Material umfassen und zum Transport von Waren ausgebildet sind. Weiterhin umfasst das Hängefördersystem eine Beladestation, an welcher eine Hängetasche mit einer Ware beladen werden kann, wenn sich der Taschenkörper in der Beladestellung befindet. Schließlich umfasst das Hängefördersystem eine Hängefördervorrichtung zum Antransport einer Hängetasche in die Beladestation und zum Abtransport der Hängetasche aus der Beladestation.

Die Erfindung betrifft auch ein Verfahren, bei dem die Hängetasche auf einer Hängefördervorrichtung bereitgestellt wird, welche vom Hängefördersystem umfasst ist, der Taschenkörper in eine Beladestellung umgestellt wird, sofern sich dieser nicht bereits in der Beladestellung befindet, die Hängetasche mit einer Ware beladen wird und der Taschenkörper nach dem Beladen in eine Transportstellung umgestellt wird.

Ein solches Hängefördersystem und ein solches Verfahren sind aus dem Stand der Technik grundsätzlich bekannt. Hängetaschen werden mit unterschiedlichen Waren beladen und in weiterer Folge in einem Lager- und Kommissioniersystem je nach Anforderung gelagert, transportiert, sortiert, kommissioniert, und so weiter. Die Abmessungen der einzelnen Hängetaschen unterscheiden sich zum Teil erheblich voneinander und hängen von der Warentype der in die Hängetasche geladenen Ware ab sowie von der Orientierung der Ware in der Hängetasche. Das heißt, selbst Hängetaschen, die mit gleichen Waren beladen sind, können sich hinsichtlich ihrer Abmessungen stark voneinander unterscheiden. Dies betrifft vor allem oder auch ausschließlich die Ausdehnung des Taschenkörpers in einer Transportrichtung der Hängetasche.

Die in einem bekannten Hängefördersystem ablaufenden Algorithmen basieren auf angenommenen Abmessungen der Hängetaschen, beispielsweise auf einem Mittelwert. Die Planung in einem Hängefördersystem kann daher nur mit mäßiger Genauigkeit erfolgen, und die Wahrscheinlichkeit für Störungen, die auf falschen Annahmen der Abmessungen der Hängetaschen basieren, ist erheblich.

Die DE 10 2012 018 925 A1 offenbart ein Hängefördersystem nach dem Oberbegriff des Anspruchs 1 und ein Verfahren nach dem Oberbegriff des Anspruchs 11.

Zudem wird in der DE 10 2012 018 925 A1 eine Hängetasche offenbart, welche einen zwischen einer Transportstellung und einer Beladestellung umstellbaren Taschenkörper aus einem biegeschlaffen Material umfasst und welche zum Transport einer Ware ausgebildet ist. Das Hängefördersystem umfasst eine Beladestation, an welcher eine Hängetasche mit einer Ware beladen werden kann, wenn sich der Taschenkörper in der Beladestellung befindet, und eine Hängefördervorrichtung zum Antransport einer Hängetasche in die Beladestation und zum Abtransport der Hängetasche aus der Beladestation. Ein solches Hängefördersystem wird in einem Lager- und Kommissioniersystem eingesetzt. Dabei sind ein Hängetaschenlager und die Beladestation über die Hängefördervorrichtung fördertechnisch verbunden.

Die EP 3 575 243 A1 betrifft ein älteres Recht gemäß Artikel 54(3) EPÜ und offenbart ein Hängefördersystem, welches eine Hängefördervorrichtung zum Transport von Waren und/oder Transporteinheiten umfasst, wobei eine Transporteinheit eine oder mehrere Waren aufnehmen kann. Entlang der Hängefördervorrichtung ist eine Messeinrichtung angeordnet, mittels welcher eine Ausdehnung der Transporteinheit und/oder der Ware in einer Transportrichtung ermittelt werden kann. Die Hängefördervorrichtung umfasst einen Matrixförderer, bei dem durch eine Steuerung abhängig von der ermittelten Ausdehnung eine Fördergeschwindigkeit individuell eingestellt wird.

Die EP 3 873 833 A1 betrifft ein älteres Recht gemäß Artikel 54(3) EPÜ und offenbart eine Speichervorrichtung zum Einspeichern von Transporteinheiten, umfassend eine Mehrzahl von Speicherstrecken, welche eingerichtet sind, Transporteinheiten zu speichern, eine Zuführstrecke, welche über jeweils eine erste Weiche an die Speicherstrecken angeschlossen ist, eine an der Zuführstrecke angeordnete Messeinrichtung, welche eingerichtet ist, jeweils eine Ausdehnung einer Transporteinheit zu ermitteln, und eine Steuerung, welche mit der Messvorrichtung und den ersten Weichen verbunden ist. Die Steuerung ist eingerichtet, anhand der von der Messvorrichtung ermittelten Ausdehnung der Transporteinheit eine Speicherstrecke zum Einspeichern der Transporteinheit auszuwählen.

Die EP 3 543 181 A1 betrifft ein älteres Recht gemäß Artikel 54(3) EPÜ und offenbart ein Hängefördersystem mit einer Fördervorrichtung zum Eintakten von Transporteinheiten, einer Mehrzahl von Transporteinheiten und einem Taktförderer zum getakteten Fördern der Transporteinheiten. Der Taktförderer umfasst eine Mehrzahl von Mitnehmern, welche jeweils mit einer Transporteinheit lösbar verbindbar sind, mindestens eine Förderstrecke und eine Weichenvorrichtung, über welche die Förderstrecke an einer Eintaktstelle an den Taktförderer angeschlossen ist, und welche eingerichtet ist, die Transporteinheiten an der Eintaktstelle in den Taktförderer einzutakten. An der Förderstrecke ist eine erste Ermittlungsvorrichtung angeordnet, welche eingerichtet ist, jeweils die Ausdehnung einer Transporteinheit zu ermitteln. Zusätzlich kann an der Förderstrecke eine zweite Ermittlungsvorrichtung angeordnet werden, welche eingerichtet ist, jeweils eine durch die erste Ermittlungsvorrichtung ermittelte Ausdehnung zu überprüfen.

Eine Aufgabe der vorliegenden Erfindung ist es daher, ein verbessertes Hängefördersystem und ein verbessertes Verfahren zum Betrieb eines Hängefördersystems anzugeben. Insbesondere soll die Planung der in einem Hängefördersystem ablaufenden Vorgänge verbessert und das Risiko für Störungen verringert werden.

Diese Aufgabe wird mit einem Hängefördersystem gemäß Anspruch 1 gelöst, welches zusätzlich eine Messeinrichtung umfasst, welche dazu ausgebildet ist, eine Ausdehnung des Taschenkörpers in einer Transportrichtung der beladenen (und hängenden) Hängetasche in der Transportstellung des Taschenkörpers (das heißt nach dem Beladen der Hängetasche und Umstellen des Taschenkörpers in die Transportstellung) zu ermitteln. Mit anderen Worten wird die Dicke des Taschenkörpers gemessen. Die Begriffe "Ausdehnung" des Taschenkörpers in einer Transportrichtung der Hängetasche und "Dicke" des Taschenkörpers werden im Folgenden synonymisch gebraucht.

Die Aufgabe der Erfindung wird weiterhin mit einem Lager- und Kommissioniersystem gelöst, umfassend ein Hängefördersystem gemäß Anspruch 1 und ein Hängetaschenlager, das über die Hängefördervorrichtung mit der Beladestation fördertechnisch verbunden ist. Ein Hängetaschenlager dient generell der Lagerung beziehungsweise Aufnahme einer Vielzahl von Hängetaschen. Das Hängetaschenlager kann insbesondere auch als Puffer (Kurzzeitlager) betrieben werden.

Die genannte Aufgabe wird auch mit einem Verfahren gemäß Anspruch 11 gelöst, bei dem eine Ausdehnung des Taschenkörpers in einer Transportrichtung der beladenen (und hängenden) Hängetasche in der Transportstellung des Taschenkörpers (das heißt nach dem Beladen der Hängetasche und Umstellen des Taschenkörpers in die Transportstellung) mit Hilfe einer Messeinrichtung ermittelt wird. Mit anderen Worten wird die Dicke des Taschenkörpers gemessen.

Durch die vorgeschlagenen Maßnahmen ist es möglich, die in einem Hängefördersystem ablaufenden Algorithmen und insbesondere die in einem Hängefördersystem eines Lager- und Kommissioniersystems ablaufenden Algorithmen basierend auf den tatsächlichen Abmessungen einer Hängetasche auszuführen, anstatt auf angenommene Abmessungen zurückzugreifen, die in der Regel nicht den Tatsachen entsprechen. Die Planung in einem Hängefördersystem beziehungsweise in einem Lager- und Kommissioniersystem kann daher genauer erfolgen, und die Wahrscheinlichkeit für Störungen kann auf diese Weise deutlich reduziert werden.

Im Speziellen kann eine ermittelte Dicke des Taschenkörpers zur Berechnung einer Aufnahmekapazität in einem Hängetaschenlager oder in einem Hängetaschenpuffer herangezogen werden. Beispielsweise kann geprüft werden, ob eine Hängetasche bekannter Dicke oder wie viele Hängetaschen bekannter Dicke auf eine Hängebahn eines Hängetaschenlagers/Hängetaschenpuffers bekannter Länge passen. Insbesondere kann dabei auf eine verbleibende freie Länge einer Hängefördervorrichtung (Hängebahn) Bezug genommen werden, wenn diese teilweise mit Hängetaschen belegt ist. An dieser Stelle wird angemerkt, dass im Hängetaschenlager/Hängetaschenpuffer zusätzlich zu den Hängetaschen auch Hängewaren (ohne Hängetaschen) gelagert/gepuffert werden können. Demzufolge kann das Hängetaschenlager auch die Funktion eines Hängewarenlagers übernehmen und der Hängetaschenpuffer auch die Funktion eines Hängewarenpuffers.

Beispielsweise ist es auch möglich, eine ermittelte Dicke des Taschenkörpers in einer Datenbank zugeordnet zu der betreffenden Hängetasche und/oder zugeordnet zu einer Warentype der in der Hängetasche geladenen Ware zu speichern. Demgemäß werden zu jeder Ware zu den ohnehin vorhandenen Daten, wie Länge, Breite, Dicke, etc. zusätzlich noch Daten über die Dicke des Taschenkörpers, welche nach dem automatischen/manuellen Beladen einer Hängetasche erfasst wird, datentechnisch verknüpft. Möglich ist auch, dass die Hängetasche und/oder ein Transportträger, auf welchem die Hängetasche hängt, mit einem Identifikationsmittel, insbesondere einem RFID-Transponder, ausgestattet ist. Das Identifikationsmittel kann die Daten über die Dicke des Taschenkörpers, welche nach dem automatischen/manuellen Beladen einer Hängetasche erfasst wird, speichern. Diese gespeicherten Informationen können in Folge für die Materialflusssteuerung herangezogen werden. Die Daten über die Dicke können aber auch in der Materialflusssteuerung gespeichert und einer jeweiligen Transportträger-ID-Nummer (identification number) zugeordnet werden.

Das Hängefördersystem umfasst die Hängefördervorrichtung und mit dieser transportierte Hängetaschen. Die Hängefördervorrichtung ist entweder als stationäre Hängefördervorrichtung oder als mobile Hängefördervorrichtung ausgebildet. Letztere kann mobile Förderfahrzeuge (sogenannte "autonomous guided vehicle - AGV" oder "autonomous mobile robot - AMR") aufweisen, mit denen die Hängetaschen transportiert werden. An dieser Stelle wird angemerkt, dass durch die Hängefördervorrichtung zusätzlich zu den Hängetaschen auch Hängewaren (ohne Hängetaschen) transportiert werden können.

Der Taschenkörper ist jener Teil der Hängetasche, in welchem die Ware aufgenommen wird. Üblicherweise besteht der Taschenkörper aus einem biegeschlaffen Material, wie einem Textil, einer Kunststofffolie, einem Geflecht oder einem Gewirke.

Die Hängetaschen können jeweils einen zwischen einer Transportstellung und einer Beladestellung umstellbaren Taschenkörper umfassen, welcher eine Hinterwand und eine Vorderwand ausbildet, wobei die Hinterwand und die Vorderwand in der Transportstellung aneinander angenähert gehalten sind, sodass die beladene Hängetasche mit der Ware transportiert werden kann. In der Beladestellung der Hängetasche sind die Hinterwand und die Vorderwand um einen solchen Abstand voneinander beabstandet, dass die Hängetasche mit einer Ware beladen werden kann. Ist die Hängetasche beladen, wird eine Ware in der Transportstellung der Hängetasche zwischen der Hinterwand und Vorderwand gehalten (insbesondere klemmend gehalten). Ist die Hängetasche unbeladen beziehungsweise leer, können die Hinterwand und die Vorderwand in der Transportstellung der Hängetasche aneinander anliegen.

Insbesondere kann der Taschenkörper umfassen
- eine Vorderwand und eine Hinterwand aus biegeschlaffem Material,
- eine an einer ersten Seite des Taschenkörpers zumindest bereichsweise zwischen der Vorder- und Hinterwand ausgebildete Beladeladeöffnung und
- einen an einer zweiten Seite des Taschenkörpers zumindest bereichsweise zwischen der Vorder- und Hinterwand ausgebildeten Seitenwandanschlag, gegen welchen die Ware anlegbar ist.

Der Taschenköper ist jener Teil der Hängetasche, welcher durch die Messeinrichtung vermessen wird. Die Messung kann im produktiven Betrieb erfolgen oder in einem gesonderten Messschritt, unabhängig vom produktiven Betrieb.

Beispielhafte Ausführungen einer Hängetasche sind in der österreichischen Patentanmeldung A50059/2019 beschrieben.

Eine Beladestation ist ein Arbeitsplatz, an dem eine Hängetasche beladen wird. Dazu umfasst die Beladestation eine Hängefördervorrichtung, mit welcher die (unbeladenen) Hängetaschen antransportiert und die (beladenen) Hängetaschen abtransportiert werden. Für den Beladevorgang kann die Hängetasche an einer Beladeposition angehalten werden, denkbar ist aber auch, dass die Hängetasche während der Beladung durch die Hängefördervorrichtung fortwährend bewegt wird. Die Beladestation kann für eine manuelle Beladung der Hängetaschen oder für eine automatische Beladung der Hängetaschen ausgebildet sein. Erfolgt eine automatische Beladung, so umfasst die Beladestation eine Beladevorrichtung oder einen Beladeroboter, der insbesondere durch einen Gelenkarmroboter oder einen Portalroboter gebildet sein kann. Generell erweist es sich als Vorteil, wenn die Hängetaschen jeweils mit einer einzigen Ware beladen werden.

Die Beladestation umfasst gemäß der Erfindung eine Betätigungsvorrichtung, durch welche der Taschenkörper von der Transportstellung in die Beladestellung und von der Beladestellung in die Transportstellung verstellbar ist. Auf diese Weise kann der Beladevorgang teilweise oder vollständig automatisiert werden.

Der Taschenkörper kann während der Transportbewegung der Hängetasche entlang der Hängefördervorrichtung aus der Transportstellung in die Beladestellung umgestellt (also geöffnet) werden. Beispielsweise kann ein Rahmengestell der Hängetasche entlang einer Kulissenführung einer Betätigungsvorrichtung gleiten und die Umstellung aus der Transportstellung in die Beladestellung bewirken. Eine derartige Ausführung für eine Beladestation ist in der DE 10 2004 018 569 A1 beschrieben. Alternativ wird die Hängetasche vorerst in die Beladeposition transportiert und in der Beladeposition angehalten, worauf der Taschenkörper durch eine Betätigungsvorrichtung, beispielweise durch einen Schwenkrahmen oder einen Beladeroboter, aus der Transportstellung in die Beladestellung umgestellt (also geöffnet) werden kann. Eine solche Ausführung für eine Beladestation ist in der WO 2018/130712 A2 oder EP 3 293 130 A1 beschrieben.

Nach dem Beladen der Hängetasche wird der Taschenkörper aus der Beladestellung in die Transportstellung umgestellt. So kann während der Transportbewegung der Hängetasche entlang der Hängefördervorrichtung der Taschenkörper aus der Beladestellung in die Transportstellung umgestellt (also geschlossen) werden. Beispielsweise kann ein Rahmengestell der Hängetasche entlang einer Kulissenführung der Betätigungsvorrichtung gleiten und die Umstellung aus der Beladestellung in die Transportstellung bewirken. Eine derartige Ausführung für eine Beladestation ist in der DE 10 2004 018 569 A1 beschrieben. Alternativ wird der Taschenkörper durch eine Betätigungsvorrichtung, beispielweise einen Schwenkrahmen oder einen Beladeroboter, aus der Beladestellung in die Transportstellung umgestellt (also geschlossen) und erst danach die Hängetasche von der Beladeposition wegtransportiert. Eine solche Ausführung für eine Beladestation ist in der WO 2018/130712 A2 oder EP 3 293 130 A1 beschrieben.

Wenngleich in einer bevorzugten Ausführung das Umstellen des Taschenkörpers zwischen der Transportstellung und Beladestellung automatisch erfolgt, kann dies auch manuell erfolgen. Beispielsweise kann eine Hängetasche in der Beladestation an einer Beladeposition bereitgestellt werden, und es kann von einer Bedienperson ein Rahmengestell der genannten Hängetasche verschwenkt werden, sodass der Taschenkörper aus der Transportstellung in die Beladestellung umgestellt wird. Sobald die Bedienperson das Rahmengestell freigibt, bewegt sich der Taschenkörper aus der Beladestellung in die Transportstellung.

Das Umstellen des Taschenkörpers von der Beladestellung in die Transportstellung oder von der Transportstellung in die Beladestellung kann also generell manuell oder automatisch erfolgen.

Das Bereitstellen der Hängetasche kann den Antransport der Hängetasche in eine Beladeposition oder das Aufhängen der Hängetasche an einer Beladeposition umfassen.

Weitere vorteilhafte Ausgestaltungen und Weiterbildungen der Erfindung ergeben sich nun aus den Unteransprüchen sowie aus der Beschreibung in Zusammenschau mit den Figuren.

Günstig ist es, wenn die Messeinrichtung in der Beladestation angeordnet ist. Auf diese Weise stehen die Messergebnisse betreffend die Ausdehnung des Taschenkörpers unmittelbar nach der Beladung der Hängetaschen zur Verfügung.

Günstig ist es aber auch, wenn die Messeinrichtung im Verlauf eines außerhalb der Beladestation angeordneten Förderabschnitts der Hängefördervorrichtung angeordnet ist. Auf diese Weise können die Messergebnisse betreffend die Ausdehnung des Taschenkörpers dann ermittelt werden, wenn sie auch aktuell benötigt werden, beispielsweise vor einem Lager oder vor einem Puffer. Dadurch werden auch Verlagerungen der Ware in der Hängetasche berücksichtigt, die auf einem Transport der Hängetasche auf dem Hängefördersystem nach der Beladestation auftreten.

Selbstverständlich können entlang der Hängefördervorrichtung mehrere Messeinrichtungen vorgesehen sein, um die Ausdehnung des Taschenkörpers öfter als einmal ermitteln zu können. Insbesondere können Messeinrichtungen sowohl in der Beladestation als auch außerhalb der Beladestation vorgesehen sein.

Günstig ist es, wenn die Hängetasche einen Hängeträger zum hängenden Transport der Hängetasche an der Hängefördervorrichtung und ein Rahmengestell umfasst, über das der Taschenkörper an dem Hängeträger hängt und durch welches der Taschenkörper zwischen der Transportstellung und der Beladestellung umstellbar ist. Durch das Rahmengestell wird der an sich biegeschlaffe Taschenkörper in einer zumindest eingeschränkt vordefinierten Form gehalten, sowohl in der Beladestellung als auch in der Transportstellung. Damit wird einerseits der Beladevorgang vereinfacht, andererseits ist eine Formänderung des Taschenkörpers während des Transports über die Hängefördervorrichtung weniger wahrscheinlich.

Günstig ist es weiterhin, wenn die Hängefördervorrichtung zum Antransport der Hängetaschen in die Beladestation und zum Abtransport der Hängetaschen aus der Beladestation Transportträger umfasst, welche durch eine Antriebsvorrichtung bewegbar sind und auf welchen die Hängetaschen über den Hängeträger aufgehängt sind. Generell kann der Taschenkörper mit seinen Enden an einem oder zwei Transportträgern auf einer Hängefördervorrichtung aufgehängt sein. Ist der Taschenkörper mit seinen Enden an zwei Transportträgern auf einer Hängefördervorrichtung aufgehängt, so ist ein Umstellen von der Transportstellung in die Beladestellung beispielsweise dadurch möglich, dass der Abstand zwischen den beiden Transportträgern vergrößert wird. Zum Umstellen von der Beladestellung in die Transportstellung wird der Abstand zwischen den beiden Transportträgern wiederum entsprechend verringert.

In einer besonders vorteilhaften Ausführungsform des Hängefördersystems ist eine im Bewegungsbereich der Hängetasche angeordnete Schwingungsberuhigungsvorrichtung vorgesehen, welche eine Besen- oder Bürstenleiste umfasst. Auf diese Weise klingt eine Schwingungsbewegung der Hängetasche, welche ungünstig für die Ermittlung der Ausdehnung des Taschenkörpers ist, rasch ab. Die Messung der Ausdehnung des Taschenkörpers kann daher rasch und mit hoher Genauigkeit erfolgen. Die Borsten der Besen- oder Bürstenleiste, welche eine Hängetasche berühren (insbesondere dessen Taschenkörper) haben dabei im Grunde mehrere Effekte. Einerseits sorgen sie, wie erwähnt, für ein rasches Abklingen einer Schwingungsbewegung, andererseits sorgen sie auch für eine Ausrichtung der Hängetasche, ermöglichen gleichzeitig aber auch einen störungsfreien Transport der Hängetaschen im Bereich der Besen- oder Bürstenleiste. Die Besen- oder Bürstenleiste kann im unteren Bewegungsbereich der Hängetasche, insbesondere an einer Unterkante des Taschenkörpers, oder im seitlichen Bewegungsbereich der Hängetasche, insbesondere an einer Seitenkante des Taschenkörpers angeordnet sein. Auch die Anordnung mehrerer Besen- oder Bürstenleisten im Bewegungsbereich ist möglich, insbesondere im unteren und seitlichen Bewegungsbereich. Dadurch treten die oben genannten Vorteile in besonderer Weise hervor.

In einer weiteren besonders vorteilhaften Ausführungsform des Hängefördersystems ist eine im Bewegungsbereich der Hängetasche angeordnete Positioniervorrichtung vorgesehen, welche eine quer (insbesondere rechtwinkelig) zur Transportrichtung der Hängetasche ausgerichtete Wand umfasst. Auf diese Weise kann eine Schwingungsbewegung der Hängetasche, welche ungünstig für die Ermittlung der Ausdehnung des Taschenkörpers ist, ebenfalls rasch beruhigt oder überhaupt verhindert werden. Die Messung der Ausdehnung des Taschenkörpers kann daher ebenfalls rasch und mit hoher Genauigkeit erfolgen. Auch die genannte Wand sorgt einerseits für ein rasches Abklingen oder Unterbinden einer Schwingungsbewegung, andererseits aber auch in besonderer Weise für eine Ausrichtung der Hängetasche. Für die Vorbereitung der Messung wird die Hängetasche (insbesondere dessen Taschenkörper) gegen die quer zur Transportrichtung ausgerichtete Wand gefahren, wodurch die Hängetasche die Orientierung der genannten Wand annimmt. Die Wand kann als fixe Wand oder als bewegliche Wand ausgeführt sein. Ist die Wand beweglich, kann sie bedarfsweise in den Bewegungsbereich der Hängetaschen verstellt, insbesondere geschwenkt und/oder geschoben, werden. Ist die Wand fix, dann wird die Transportrichtung der Hängetaschen geändert, um diese zur und von der Wand zu fahren.

Vorteilhaft ist es darüber hinaus, wenn die Messeinrichtung als Kamera oder Lichtgitter (welches einer Anordnung mehrerer Lichtschranken mit gitterförmig angeordneten Lichtstrahlen entspricht) ausgebildet ist. Die Messeinrichtung kann optoelektronische Sensoren umfassen, mittels welcher die Ausdehnung des Taschenkörpers auf berührungslosem Wege erfasst werden, beispielweise mittels einer CCD-Kamera (Charge Coupled Device). Demgemäß werden erprobte und leicht verfügbare Mittel für den angegebenen Zweck eingesetzt. Ein besonderer Vorteil der Kamera besteht darin, dass damit nicht nur die Ausdehnung des Taschenkörpers ermittelt werden kann, sondern auch andere Eigenschaften erfassbar sind. Beispielsweise kann mit der Kamera eine Warentype der in die Hängetasche geladenen Ware, die Anzahl der in die Hängetasche geladenen Waren sowie die Orientierung der in die Hängetasche geladenen Ware ermittelt werden. Durch die Verwendung eines Lichtgitters können insbesondere konvexe Formen des Taschenkörpers mit hoher Genauigkeit vermessen werden.

Günstig ist es, wenn die Ausdehnung des Taschenkörpers im Stillstand der Hängetasche gemessen wird. Dadurch ist das Ergebnis unabhängig von der für die Messung benötigten Zeit. Insbesondere eignet sich diese Ausführungsvariante für die Anwendung im Zusammenhang mit einer Kamera, die als Messeinrichtung fungiert.

Günstig ist es aber auch, wenn die Ausdehnung des Taschenkörpers gemessen wird, während die Hängetasche auf der Hängefördervorrichtung transportiert wird (das heißt die Messung erfolgt in der Bewegung). Dadurch kann eine Messung der Dicke des Taschenkörpers insbesondere mit einer stillstehenden Messeinrichtung erfolgen, beispielsweise mit einem fix installierten Lichtgitter.

Bei einer besonders vorteilhaften Ausführungsvariante des vorgeschlagenen Verfahrens wird über eine (optische und/oder akustische) Ausgabeeinheit, welche von der Beladestation umfasst ist, eine Anweisung an eine Bedienperson in der Beladestation oder an einen Beladeroboter der Beladestation ausgegeben, die in der Hängetasche geladene Ware anders (insbesondere in einer vorgegeben Orientierung) in der Hängetasche abzulegen, wenn die ermittelte Ausdehnung/Dicke des Taschenkörpers über einem Referenzwert liegt. Die Anweisung für die Bedienperson kann eine Bildausgabe, Tonausgabe und/oder Sprachausgabe sein. Die Anweisung für den Beladeroboter in der Beladestation ist dahingehend zu verstehen, dass dieser entsprechende Steuersignale erhält, durch welche eine automatisierte Umlagerung der Ware in der Hängetasche und/oder eine Beladung der Hängetaschen mit einer entsprechend zuvor durch den Beladeroboter orientiert ausgerichteten Ware erfolgt.

Bei dieser Ausführungsvariante wird also davon ausgegangen, dass die Ware in einer vorgegebenen Orientierung in der Hängetasche abgelegt wird. Diese Vorgabe kann bei manueller Beladung aktiv erfolgen, beispielsweise über eine entsprechende Darstellung auf einem Bildschirm in der Beladestation, oder dadurch, dass die Bedienperson an der Beladestation entsprechend geschult wird. Erfolgt die Beladung automatisch, dann kann eine entsprechende Anweisung an einen Beladeroboter erfolgen. Ein besonderes Problem bei der Beladung von Hängetaschen ist darin begründet, dass die Ausdehnung/Dicke selbst dann nicht zwangsläufig einem Erwartungs- oder Referenzwert entspricht, wenn die Ware korrekt, also entsprechend der Vorgabe, in der Hängetasche abgelegt wird. Der Grund dafür ist, dass sich die Orientierung der Ware beim Schließen der Hängetasche, das heißt beim Umstellen von der Beladestellung in die Transportstellung, und/oder während des Transports der Hängetasche auf der Hängefördervorrichtung in unerwarteter und unerwünschter Weise verändern kann. Durch die vorgeschlagenen Maßnahmen ist aber eine Überprüfung und entsprechende Korrektur möglich. Die Anweisung an die Bedienperson in der Beladestation oder an den Beladeroboter der Beladestation kann dabei insbesondere die Information umfassen, in welcher Orientierung die Ware in der Hängetasche abzulegen ist, beispielsweise bei manueller Beladung über eine entsprechende graphische Darstellung auf einem Bildschirm in der Beladestation. Denkbar ist aber auch, dass die genannte Anweisung keine solche Information enthält. Dies ist insbesondere dann ausreichend, wenn die gewünschte Orientierung für die Bedienperson in der Beladestation oder den Beladeroboter der Beladestation ohnehin bekannt ist. Im Grunde reicht bei manueller Beladung dazu die Aktivierung einer Signalleuchte oder die Ausgabe eines Signaltons aus.

Besonders vorteilhaft ist es auch, wenn über eine (optische oder akustische) Ausgabeeinheit, welche von der Beladestation umfasst ist, eine Anweisung an eine Bedienperson in der Beladestation oder an einen Beladeroboter der Beladestation ausgegeben wird, die in der Hängetasche geladene Ware anders (insbesondere in einer vorgegeben Orientierung) in der Hängetasche abzulegen, wenn eine ermittelte Orientierung einer in die Hängetasche abgelegten Ware über einem Schwellwert von einer Referenz-Orientierung abweicht. Die dazu vorgeschlagenen Möglichkeiten und daraus resultierenden Vorteile entsprechen den zuvor genannten Ausführungsvarianten und Vorteilen. Allerdings wird nicht die Ausdehnung/Dicke des Taschenkörpers mit einem Referenzwert verglichen, um eine unerwünschte Orientierung der Ware im Taschenkörper festzustellen, sondern es wird direkt die Orientierung der Ware mit einer Referenz-Orientierung verglichen, beispielsweise unter Zuhilfenahme einer Kamera. Bei dieser Ausführungsvariante wird also wiederum davon ausgegangen, dass die Ware in einer vorgegebenen Orientierung in der Hängetasche abgelegt wird. Diese Vorgabe kann bei manueller Beladung aktiv erfolgen, beispielsweise über eine entsprechende Darstellung auf einem Bildschirm in der Beladestation, oder dadurch, dass die Bedienperson an der Beladestation entsprechend geschult wird. Erfolgt die Beladung automatisch, dann kann eine entsprechende Anweisung an einen Beladeroboter erfolgen. Ein besonderer Vorteil des vorgeschlagenen Verfahrens liegt darin, dass eine unerwünschte Orientierung der Ware in der Hängetasche schon festgestellt werden kann, bevor der Taschenkörper in die Transportstellung umgestellt wird. Entspricht die tatsächliche Orientierung der Ware in der Hängetasche nicht der erwarteten Orientierung, dann kann die Anweisung an die Bedienperson in der Beladestation oder an den Beladeroboter der Beladestation wiederum insbesondere die Information umfassen, in welcher Orientierung die Ware in der Hängetasche abzulegen ist, beispielsweise bei manueller Beladung über eine entsprechende Darstellung auf einem Bildschirm in der Beladestation. Denkbar ist aber auch, dass die genannte Anweisung keine solche Information enthält. Dies ist insbesondere dann ausreichend, wenn die gewünschte Orientierung für die Bedienperson in der Beladestation oder den Beladeroboter der Beladestation ohnehin bekannt ist. Im Grunde reicht bei manueller Beladung dazu die Aktivierung einer Signalleuchte oder die Ausgabe eines Signaltons aus.

An dieser Stelle wird angemerkt, dass sich die zu dem vorgestellten Hängefördersystem beziehungsweise die zu dem Lager- und Kommissioniersystem offenbarten Varianten und Vorteile gleichermaßen auf das vorgestellte Verfahren beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: ein beispielhaftes und schematisch dargestelltes Hängefördersystem beziehungsweise eine Beladestation mit einer Kamera, einer Schwingungsberuhigungsvorrichtung und einer Hängetasche in Beladestellung in Schrägansicht;
- Fig. 2: wie Fig. 1, jedoch mit der beladenen Hängetasche in Transportstellung;
- Fig. 3: ein beispielhaftes und schematisch dargestelltes Hängefördersystem beziehungsweise eine Beladestation mit einer Kamera, einer Positioniervorrichtung und einer beladenen Hängetasche in Transportstellung in Schrägansicht;
- Fig. 4: ein beispielhaftes und schematisch dargestelltes Hängefördersystem mit einem Lichtgitter und einer beladenen Hängetasche in Transportstellung in Schrägansicht;
- Fig. 5: ein beispielhaftes und schematisch dargestelltes Hängefördersystem beziehungsweise eine Beladestation mit einer Hängetaschen-Betätigungsvorrichtung und einer Hängetasche in Beladestellung in Schrägansicht;
- Fig. 6: ein beispielhaftes und schematisch dargestelltes Lager- und Kommissioniersystem in Draufsicht und
- Fig. 7: ein beispielhaftes Ablaufdiagramm für die Beladung und das Vermessen einer Hängetasche.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

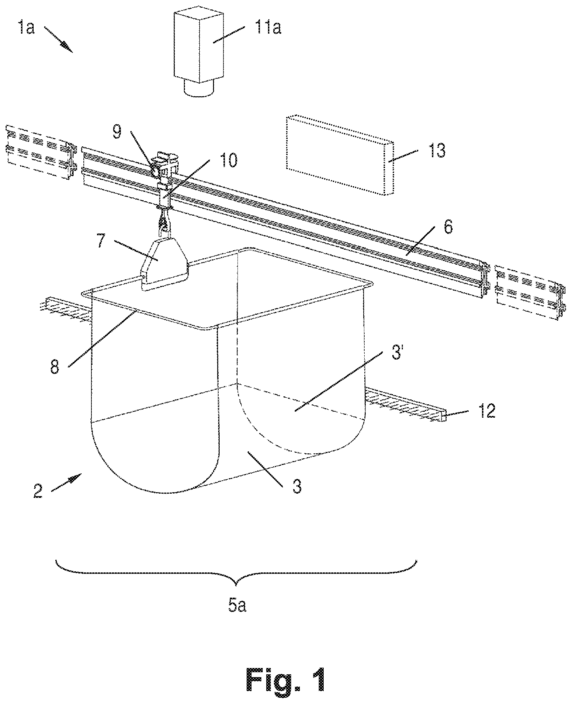

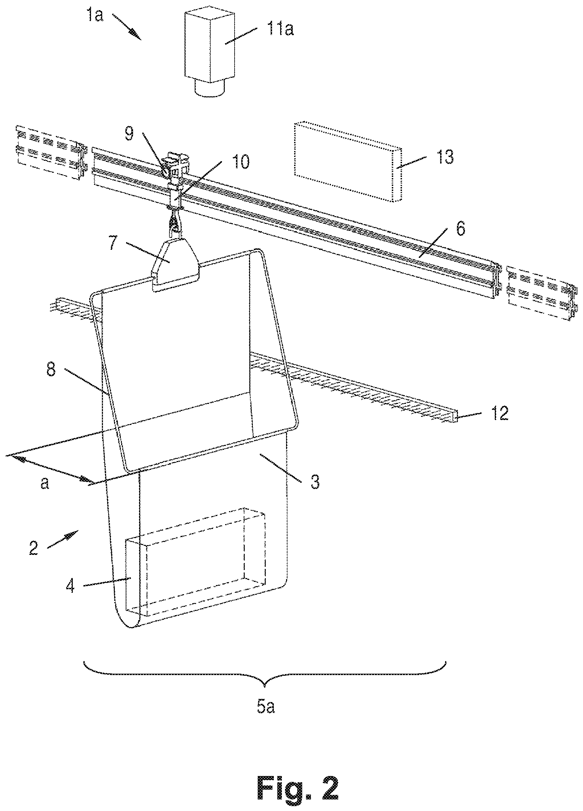

Die Figuren 1 und 2 zeigen eine erste beispielhafte und schematisch dargestellte Ausführungsform eines Hängefördersystems 1a in Schrägansicht. Das Hängefördersystem 1a umfasst Hängetaschen 2, welche jeweils einen zwischen einer Transportstellung und einer Beladestellung umstellbaren Taschenkörper 3 aus einem biegeschlaffen Material aufweisen und zum Transport von Waren 4 ausgebildet sind. Der Taschenkörper 3 bildet jenen Teil der Hängetasche 2, in welchem die Ware 4 aufgenommen wird, und ist üblicherweise aus einem Textil, einer Kunststofffolie, einem Geflecht oder einem Gewirke gefertigt. Die Fig. 1 zeigt den unbeladenen Taschenkörper 3 in der Beladestellung und die Fig. 2 zeigt den mit der Ware 4 beladenen Taschenkörper 3 in der Transportstellung.

Das Hängefördersystem 1a umfasst zudem eine Beladestation 5a, an welcher eine Hängetasche 2 mit einer Ware 4 beladen werden kann, wenn sich der Taschenkörper 3 in der Beladestellung befindet. Weiterhin umfasst das Hängefördersystem 1a eine Hängefördervorrichtung 6 zum Antransport einer Hängetasche 2 in die Beladestation 5a und zum Abtransport der Hängetasche 3 aus der Beladestation 5a. Die Beladestation 5a ist in diesem Beispiel im Wesentlichen durch einen Haltebereich auf der Hängefördervorrichtung 6 ausgebildet, sie kann aber natürlich auch komplexer aufgebaut sein.

Die Hängetasche 2 weist in diesem Beispiel einen optionalen Hängeträger 7 zum hängenden Transport der Hängetasche 2 an der Hängefördervorrichtung 6 auf, sowie ein Rahmengestell 8, über das der Taschenkörper 3 an dem Hängeträger 7 hängt und durch welches der Taschenkörper 3 zwischen der Transportstellung und der Beladestellung umstellbar ist. Konkret hängt der Hängeträger 7 in diesem Beispiel an einem mit Rollen 9 ausgestatteten Transportträger (Laufwagen) 10, welcher durch eine Antriebsvorrichtung der Hängefördervorrichtung 6 bewegbar ist. Denkbar wäre aber natürlich auch eine andere Aufhängungsart. Unterschiedliche Ausführungen von Antriebsvorrichtungen und der Transportträger sind beispielsweise in der österreichischen Patentanmeldung A50092/2019 beschrieben. Die Transportträger können demnach durch einen Reibschlussantrieb oder einen Formschlussantrieb an der Hängefördervorrichtung 6 bewegt werden. Durch das Rahmengestell 8 wird der an sich biegeschlaffe Taschenkörper 3 in einer zumindest eingeschränkt vordefinierten Form gehalten, sowohl in der Beladestellung als auch in der Transportstellung. Damit wird einerseits der Beladevorgang vereinfacht, andererseits ist eine Formänderung des Taschenkörpers 3 während des Transports über die Hängefördervorrichtung 6 weniger wahrscheinlich.

Der Taschenkörper 3 bildet im gezeigten Beispiel eine Hinterwand und eine Vorderwand aus. In der in Fig. 1 dargestellten Beladestellung der Hängetasche 2 sind die Hinterwand und die Vorderwand des Taschenkörpers 3 um einen solchen Abstand voneinander beabstandet, dass die Hängetasche 2 mit der Ware 4 beladen werden kann. In der in Fig. 2 dargestellten Transportstellung der Hängetasche 2 sind die Hinterwand und die Vorderwand in der Transportstellung aneinander angenähert gehalten, sodass die beladene Hängetasche 2 mit der Ware 4 sicher transportiert werden kann. Die Ware 4 wird in der Transportstellung der Hängetasche 2 insbesondere klemmend zwischen der Hinterwand und Vorderwand gehalten. Ist die Hängetasche 2 unbeladen beziehungsweise leer, können die Hinterwand und die Vorderwand in der Transportstellung der Hängetasche 2 aneinander anliegen. Denkbar ist auch, dass die Hängetasche 2 eine an einer ersten Seite des Taschenkörpers 3 zumindest bereichsweise zwischen der Vorder- und Hinterwand ausgebildete Beladeladeöffnung und einen an einer zweiten Seite des Taschenkörpers 3 zumindest bereichsweise zwischen der Vorder- und Hinterwand ausgebildeten (ausschließlich in Fig. 1 eingetragenen) Seitenwandanschlag 3' umfasst, gegen welchen die Ware 4 anlegbar ist. Dieser Seitenwandanschlag verhindert das seitliche Herausrutschen der Ware 2 aus dem Taschenkörper 3.

Darüber hinaus umfasst das Hängefördersystem 1a eine Messeinrichtung 11a, welche dazu ausgebildet ist, eine Ausdehnung a des Taschenkörpers 3 in einer Transportrichtung der beladenen Hängetasche 2 in der Transportstellung des Taschenkörpers 3 (also die Dicke des Taschenkörpers 3) zu ermitteln. Konkret ist die Messeinrichtung 11a in diesem Beispiel als Kamera ausgebildet, welche über der Hängefördervorrichtung 6 angeordnet und nach unten ausgerichtet ist. Selbstverständlich wäre aber auch eine andere Position und/oder eine andere Ausrichtung der Kamera 11a denkbar.

Schließlich umfasst das Hängefördersystem 1a in diesem Beispiel eine optionale, im Bewegungsbereich der Hängetasche 2 angeordnete Schwingungsberuhigungsvorrichtung 12, welche eine Besen- oder Bürstenleiste umfasst.

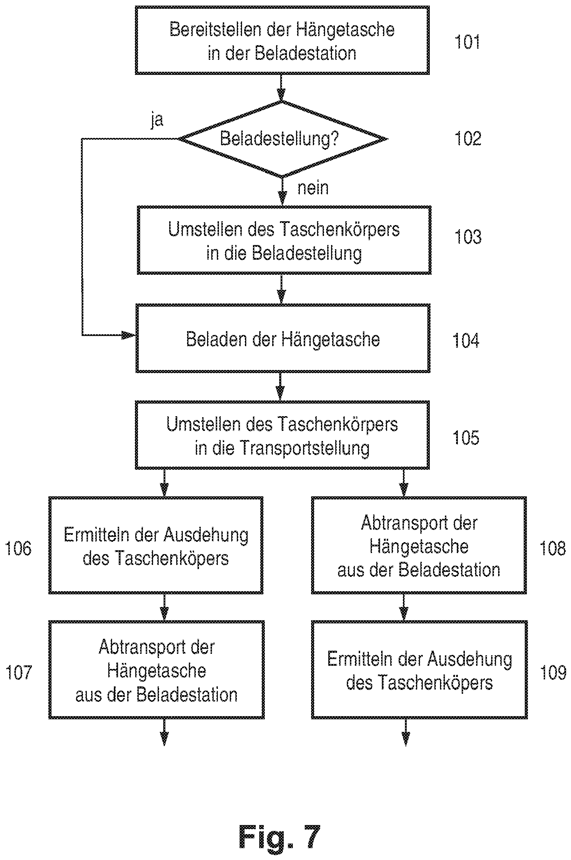

Die Funktion der in den Figuren 1 und 2 dargestellten Hängefördersystems 1a wird nun unter Bezugnahme auf die Fig. 7 näher erläutert:
In einem ersten Schritt 101 wird die Hängetasche 2 in der Beladestation 5a bereitgestellt. In dem in der Fig. 1 und 2 dargestellten Beispiel erfolgt dies dadurch, dass die Hängetasche 2 über die Hängefördervorrichtung 6 in die Beladestation 5a antransportiert wird. In einem optionalen Schritt 102 wird geprüft, ob sich die Hängetasche 2 in der Beladestellung befindet. Trifft dies nicht zu, wird der Taschenkörper 3 in einem Schritt 103 in die Beladestellung umgestellt. Die explizite Überprüfung der Beladestellung im Schritt 102 kann entfallen, wenn die Hängetaschen 2 im Schritt 101 stets in der Transportstellung in der Beladestation 5a bereitgestellt werden. In einem weiteren Schritt 104 wird die Hängetasche 2 mit der Ware 4 beladen. In einem Schritt 105 wird der Taschenkörper 3 in Folge in die Transportstellung umgestellt. In einem weiteren Schritt 106 wird die Ausdehnung/Dicke a des Taschenkörpers 3 in der Transportrichtung der beladenen Hängetasche 2 ermittelt. Schließlich wird die Hängetasche 2 in einem Schritt 107 mit der Hängefördervorrichtung 6 aus der Beladestation 5a abtransportiert. Die Messung der Ausdehnung a des Taschenkörpers 3 kann allgemein im produktiven Betrieb erfolgen oder in einem gesonderten Messschritt, unabhängig vom produktiven Betrieb.

Die Abfolge der Schritte 106 und 107 trifft für die in den Fig. 1 und 2 dargestellte Ausführungsform des Hängefördersystems 1a zu, nach der die Messeinrichtung 11a in der Beladestation 5 angeordnet ist. Denkbar wäre aber auch, dass die Messeinrichtung 11a im Verlauf eines außerhalb der Beladestation 5a angeordneten Förderabschnitts der Hängefördervorrichtung 6 angeordnet ist. In diesem Fall würde die Hängetasche 2 in einem Schritt 108 zuerst aus der Beladestation 5a abtransportiert und in einem Schritt 109 vermessen werden.

Ist die Messeinrichtung 11a, wie in den Fig. 1 und 2 dargestellt, in der Beladestation 5a angeordnet, stehen die Messergebnisse betreffend die Ausdehnung a des Taschenkörpers 3 rasch, nämlich noch vor dem Abtransport der Hängetasche 2 aus der Beladestation 5a, zur Verfügung.

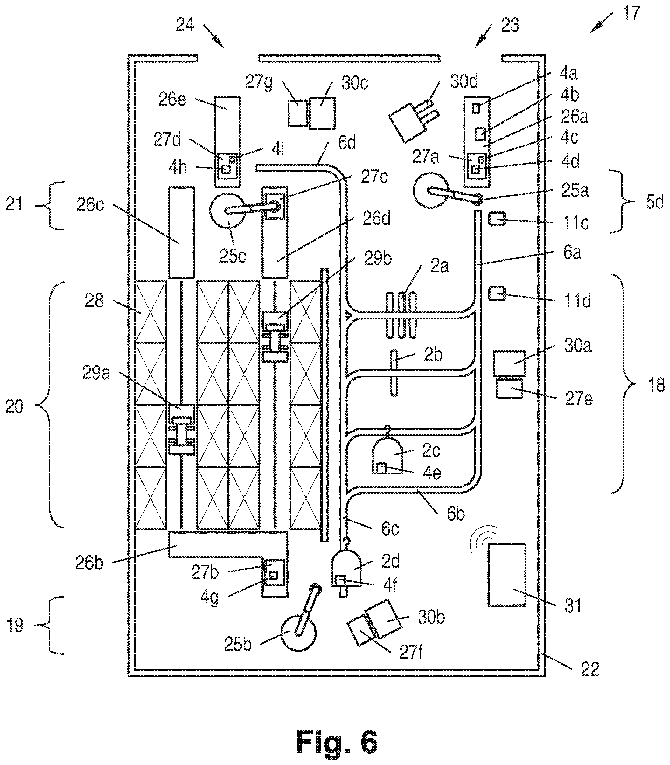

Ist die Messeinrichtung 11a außerhalb der Beladestation 5a angeordnet, können die Messergebnisse betreffend die Ausdehnung a des Taschenkörpers 3 dann ermittelt werden, wenn sie auch aktuell benötigt werden, beispielsweise vor einem Lager oder vor einem Puffer (vergleiche auch Fig. 6). Dadurch werden auch Verlagerungen der Ware 4 in der Hängetasche 2 berücksichtigt, die auf einem Transport der Hängetasche 2 auf der Hängefördervorrichtung 6 nach der Beladestation 5a auftreten.

Selbstverständlich können entlang der Hängefördervorrichtung 6 auch mehrere Messeinrichtungen 11a vorgesehen sein, um die Ausdehnung/Dicke a des Taschenkörpers 2 öfter als einmal ermitteln zu können. Insbesondere können Messeinrichtungen 11a sowohl in der Beladestation 5 als auch außerhalb der Beladestation 5 vorgesehen sein. Die genannten Messeinrichtungen 11a können auch unterschiedlicher Bauart sein.

Die ermittelte Ausdehnung/Dicke a des Taschenkörpers 3 kann in einer Datenbank zugeordnet zu der betreffenden Hängetasche 2 und/oder zugeordnet zu einer Warentype der in der Hängetasche 2 geladenen Ware 4 gespeichert werden. Demgemäß werden zu jeder Ware 4 zu den ohnehin vorhandenen Daten, wie Länge, Breite, Dicke, etc. zusätzlich noch Daten über die Ausdehnung/Dicke a des Taschenkörpers 3, welche nach dem Beladen einer Hängetasche 2 erfasst wird, datentechnisch verknüpft. Möglich ist auch, dass die Hängetasche 2 mit einem Identifikationsmittel, insbesondere einem RFID-Transponder, ausgestattet ist. Das Identifikationsmittel kann die Daten über die Ausdehnung/Dicke a des Taschenkörpers 3, welche nach dem Beladen der Hängetasche 2 erfasst wird, speichern. Diese gespeicherten Informationen können in Folge für die Materialflusssteuerung herangezogen werden.

Im Speziellen kann die ermittelte Ausdehnung/Dicke a des Taschenkörpers 3 zur Berechnung einer Aufnahmekapazität in einem Hängetaschenlager oder in einem Hängetaschenpuffer herangezogen werden. Beispielsweise kann geprüft werden, ob eine Hängetasche 2 bekannter Dicke a oder wie viele Hängetaschen 2 bekannter Dicke a auf eine Hängefördervorrichtung 6 (Hängebahn) eines Hängetaschenlagers/Hängetaschenpuffers bekannter Länge passen. Insbesondere kann dabei auf eine verbleibende freie Länge einer Hängefördervorrichtung 6 Bezug genommen werden, wenn diese teilweise mit Hängetaschen 2 und gegebenenfalls Hängewaren belegt ist (siehe auch Fig. 6).

Während des Beladevorgangs der Hängetasche 2 und während des Transports derselben auf der Hängefördervorrichtung 6 kann die Hängetasche 2 zu schwingen beginnen, insbesondere wenn diese beschleunigt oder abgebremst wird. Die Schwingung kann dabei in Transportrichtung der Hängetasche 2, quer zur Transportrichtung der Hängetasche 2 oder in allgemeiner Richtung erfolgen. Generell kann die Messung der Ausdehnung/Dicke a des Taschenkörpers 2 durch die Schwingungsbewegung in unerwünschter Weise beeinflusst werden. Dies ist insbesondere dann der Fall, wenn die Messzeit in der Größenordnung der Periodendauer der Schwingung der Hängetasche 2 liegt.

Um eine Schwingungsbewegung zu vermeiden oder wenigstens rasch zum Abklingen zu bringen und gleichzeitig für eine Ausrichtung der Hängetasche 2 zu sorgen, ist in dem in der Fig. 1 und 2 dargestellten Beispiel die Besen- oder Bürstenleiste 12 vorgesehen, welche im Bewegungsbereich der Hängetasche 2 angeordnet ist. Die Besen- oder Bürstenleiste 12 ist dazu so ausgerichtet, dass die Borsten der Besen- oder Bürstenleiste 12 die Hängetasche 2 berühren, insbesondere dessen Taschenkörper 3. Die Besen- oder Bürstenleiste 12 bietet nicht nur die oben genannten Vorteile, sondern ermöglicht auch einen störungsfreien Transport der Hängetaschen 2 im Bereich der Besen- oder Bürstenleiste 12.

Die Besen- oder Bürstenleiste 12 kann, wie in den Fig. 1 und 2 dargestellt, im seitlichen Bewegungsbereich der Hängetasche 2 angeordnet sein (insbesondere an der Seitenkante des Taschenkörpers 3), die Besen- oder Bürstenleiste 12 kann aber auch im unteren Bewegungsbereich der Hängetasche 2 angeordnet sein (insbesondere an der Unterkante des Taschenkörpers 3). Auch die Anordnung mehrerer Besen- oder Bürstenleisten 12 im Bewegungsbereich ist möglich, insbesondere sowohl im unteren und seitlichen Bewegungsbereich.

Bei einer besonders vorteilhaften Ausführungsvariante des vorgeschlagenen Verfahrens wird über eine optionale Ausgabeeinheit 13 der Beladestation 5a, welche in diesem Beispiel als Bildschirm ausgeführt ist, eine Anweisung an eine Bedienperson in der Beladestation 5a oder an einen Beladeroboter der Beladestation 5a ausgegeben, die in der Hängetasche 2 geladene Ware 4 anders (insbesondere in einer vorgegeben Orientierung) in der Hängetasche 2 abzulegen, wenn die ermittelte Ausdehnung/Dicke a des Taschenkörpers 3 über einem Referenzwert liegt. Bei dieser Ausführungsvariante wird also davon ausgegangen, dass die Ware 4 in einer vorgegebenen Orientierung in der Hängetasche 2 abgelegt werden soll. Diese Vorgabe kann bei manueller Beladung aktiv erfolgen, beispielsweise über eine entsprechende Darstellung auf dem Bildschirm 13 oder dadurch, dass die Bedienperson an der Beladestation 5 entsprechend geschult wird. Erfolgt die Beladung automatisch, dann kann eine entsprechende Anweisung an einen Beladeroboter erfolgen (vergleiche Fig. 6). Bei manueller Beladung ist natürlich auch eine akustische, über einen Lautsprecher ausgegebene, Anweisung vorstellbar. Die Ausgabeeinheit 13 umfasst dann diesen Lautsprecher.

Ein besonderes Problem bei der Beladung von Hängetaschen 2 ist darin begründet, dass die Ausdehnung/Dicke a selbst dann nicht zwangsläufig dem Erwartungs- oder Referenzwert entspricht, wenn die Ware 4 korrekt, also entsprechend der Vorgabe, in der Hängetasche 2 abgelegt wird. Der Grund dafür ist, dass sich die Orientierung der Ware 4 beim Schließen der Hängetasche 2, das heißt beim Umstellen von der Beladestellung in die Transportstellung, und/oder während des Transports der Hängetasche 2 auf der Hängefördervorrichtung 6 in unerwarteter und unerwünschter Weise verändern kann. Durch die vorgeschlagenen Maßnahmen ist aber eine Überprüfung und entsprechende Korrektur möglich. Die Anweisung an die Bedienperson in der Beladestation 5a oder an den Beladeroboter der Beladestation 5a kann dabei insbesondere die Information umfassen, in welcher Orientierung die Ware 4 in der Hängetasche 2 abzulegen ist, beispielsweise bei manueller Beladung über eine entsprechende Darstellung auf dem Bildschirm 13 und/oder über eine akustische (gesprochene) Anweisung. Denkbar ist aber auch, dass die genannte Anweisung keine solche Information enthält. Dies ist insbesondere dann ausreichend, wenn die gewünschte Orientierung für die Bedienperson in der Beladestation 5a oder den Beladeroboter der Beladestation 5a ohnehin bekannt ist.

Besonders vorteilhaft ist es auch, wenn über die Ausgabeeinheit 13 der Beladestation 5a eine Anweisung an eine Bedienperson in der Beladestation 5a oder an einen Beladeroboter der Beladestation 5a ausgegeben wird, die in der Hängetasche 2 geladene Ware 4 anders (insbesondere in einer vorgegeben Orientierung) in der Hängetasche 2 abzulegen, wenn eine ermittelte Orientierung einer in die Hängetasche 2 abgelegten Ware 4 über einem Schwellwert von einer Referenz-Orientierung abweicht. Die dazu vorgeschlagenen Möglichkeiten und daraus resultierenden Vorteile entsprechen den zuvor genannten Ausführungsvarianten und Vorteilen. Allerdings wird nicht die Ausdehnung/Dicke a des Taschenkörpers 3 mit einem Referenzwert verglichen, um eine unerwünschte Orientierung der Ware 4 im Taschenkörper 3 festzustellen, sondern es wird direkt die Orientierung der Ware 4 mit einer Referenz-Orientierung verglichen, beispielsweise unter Zuhilfenahme der Kamera 11.

Bei dieser Ausführungsvariante wird also wiederum davon ausgegangen, dass die Ware 4 in einer vorgegebenen Orientierung in der Hängetasche 2 abgelegt werden soll. Diese Vorgabe kann bei manueller Beladung aktiv erfolgen, beispielsweise über eine entsprechende Darstellung auf dem optionalen Bildschirm 13, oder dadurch, dass die Bedienperson an der Beladestation 5a entsprechend geschult wird. Erfolgt die Beladung automatisch, dann kann eine entsprechende Anweisung an einen Beladeroboter erfolgen. Ein besonderer Vorteil des vorgeschlagenen Verfahrens liegt darin, dass eine unerwünschte Orientierung der Ware 4 in der Hängetasche 2 schon festgestellt werden kann, bevor der Taschenkörper 3 in die Transportstellung umgestellt wird. Entspricht die tatsächliche Orientierung der Ware 4 in der Hängetasche 2 nicht der erwarteten Orientierung, dann kann die Anweisung an die Bedienperson in der Beladestation 5 oder an den Beladeroboter der Beladestation 5 wiederum insbesondere die Information umfassen, in welcher Orientierung die Ware 4 in der Hängetasche 2 abzulegen ist, beispielsweise bei manueller Beladung über eine entsprechende Darstellung (Bildausgabe) auf dem Bildschirm 13 und/oder über eine akustische (gesprochene) Anweisung (Sprachausgabe). Denkbar ist aber auch, dass die genannte Anweisung keine solche Information enthält. Dies ist insbesondere dann ausreichend, wenn die gewünschte Orientierung für die Bedienperson in der Beladestation 5a oder den Beladeroboter der Beladestation 5a ohnehin bekannt ist.

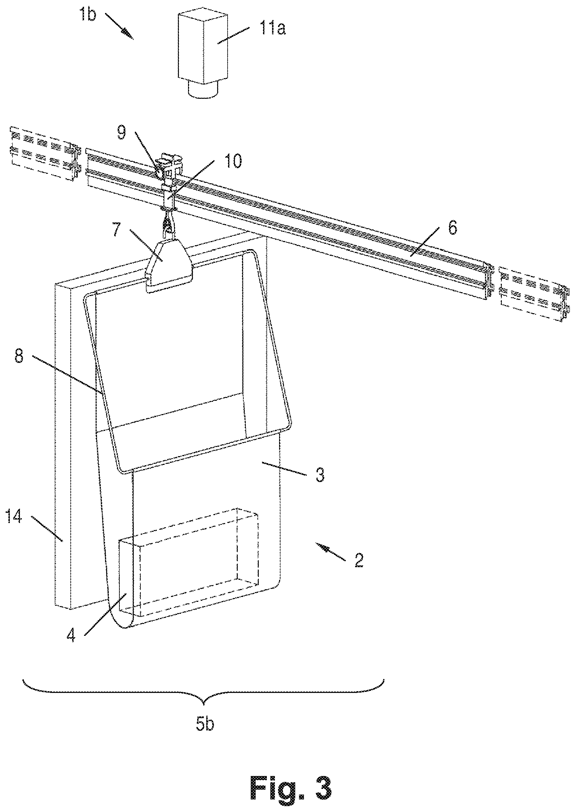

In dem in den Fig. 1 und 2 dargestellten Beispiel wird eine Schwingungsbewegung der Hängetasche 2 durch eine Besen- oder Bürstenleiste 12 abgeschwächt oder sogar verhindert. Dies ist jedoch nicht die einzig vorstellbare Möglichkeit. Denkbar ist auch, dass eine im Bewegungsbereich der Hängetasche 2 angeordnete Positioniervorrichtung 14 vorgesehen ist, welche eine quer (insbesondere rechtwinkelig) zur Transportrichtung der Hängetasche ausgerichtete Wand umfasst, so wie das in dem in der Fig. 3 dargestellten Beispiel eines Hängefördersystems 1b der Fall ist, das dem Hängefördersystem 1a sehr ähnlich ist. Mit Hilfe dieser Wand 14 kann eine Schwingungsbewegung der Hängetasche 2, welche ungünstig für die Ermittlung der Ausdehnung a des Taschenkörpers 3 ist, ebenfalls rasch beruhigt oder überhaupt verhindert werden. Die Messung der Ausdehnung a des Taschenkörpers 3 kann daher ebenfalls rasch und mit hoher Genauigkeit erfolgen. Auch die genannte Wand 14 sorgt einerseits für ein rasches Abklingen oder Unterbinden einer Schwingungsbewegung, andererseits aber auch in besonderer Weise für eine Ausrichtung der Hängetasche 2. Für die Vorbereitung der Messung wird die Hängetasche 2 (insbesondere dessen Taschenkörper 3) gegen die quer zur Transportrichtung ausgerichtete Wand 14 gefahren, wodurch die Hängetasche 2 die Orientierung der genannten Wand 14 annimmt. Die Wand 14 kann als fixe Wand oder als bewegliche Wand ausgeführt sein. Ist die Wand 14 beweglich, kann sie bedarfsweise in den Bewegungsbereich der Hängetaschen 2 geschwenkt und/oder geschoben werden. Ist die Wand 14 fix, dann wird die Transportrichtung der Hängetaschen 2 geändert, um diese zur und von der Wand 14 zu fahren. Darüber hinaus sind die zu dem in den Fig. 1 und 2 dargestellten Hängefördersystem 1a genannten Ausführungsvarianten und Vorteile sinngemäß auch für das Hängefördersystem 1b der Fig. 3 anwendbar.

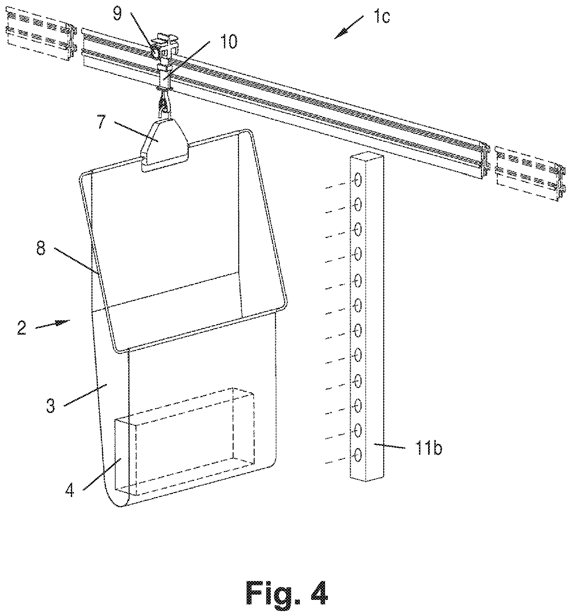

In dem in den Fig. 1 und 2 dargestellten Beispiel ist die Messeinrichtung als Kamera 11a ausgeführt. Dies ist jedoch nicht die einzig vorstellbare Möglichkeit. Denkbar ist auch, dass die Messeinrichtung als Lichtgitter 11b (welches einer Anordnung mehrerer Lichtschranken mit gitterförmig angeordneten Lichtstrahlen entspricht) ausgebildet ist, so wie das bei dem in Fig. 4 dargestellten Hängefördersystem 1c der Fall ist, welches dem Hängefördersystem 1a ebenfalls sehr ähnlich ist. Durch die Verwendung eines Lichtgitters 11b können insbesondere konvexe Formen des Taschenkörpers 3 mit hoher Genauigkeit vermessen werden. Ein Vorteil der Kamera 11a besteht dagegen darin, dass damit nicht nur die Ausdehnung a des Taschenkörpers 3 ermittelt werden kann, sondern auch andere Eigenschaften erfassbar sind. Beispielsweise kann mit der Kamera 11a eine Warentype der in die Hängetasche 2 geladenen Ware 4, die Anzahl der in die Hängetasche 2 geladenen Waren 4 sowie die Orientierung der in die Hängetasche 2 geladenen Ware 4 ermittelt werden. Darüber hinaus gelten wiederum die zu dem in den Fig. 1 und 2 dargestellten Hängefördersystem 1a und zu dem in der Fig. 3 dargestellten Hängefördersystem 1b genannten Ausführungsvarianten und Vorteile sinngemäß auch für das Hängefördersystem 1c der Fig. 4.

Denkbar ist generell, dass die Ausdehnung a des Taschenkörpers 3 gemessen wird, während die Hängetasche 2 auf der Hängefördervorrichtung 6 transportiert wird (das heißt die Messung erfolgt in der Bewegung). Diese Art der Messung eignet sich insbesondere stillstehenden Messeinrichtungen mit engem Erfassungsbereich, so wie das bei dem Lichtgitter 11b der Fig. 4 der Fall ist.

Denkbar ist aber auch, dass die Ausdehnung a des Taschenkörpers 3 im Stillstand der Hängetasche 2 gemessen wird. Dadurch ist das Ergebnis unabhängig von der für die Messung benötigten Zeit. Insbesondere eignet sich diese Ausführungsvariante für die Anwendung im Zusammenhang mit einer Kamera 11a, die als Messeinrichtung fungiert. Grundsätzlich kann die Ausdehnung a des Taschenkörpers 3 mit der Kamera 11a aber auch während der Transportbewegung der Hängetasche 2 gemessen werden.

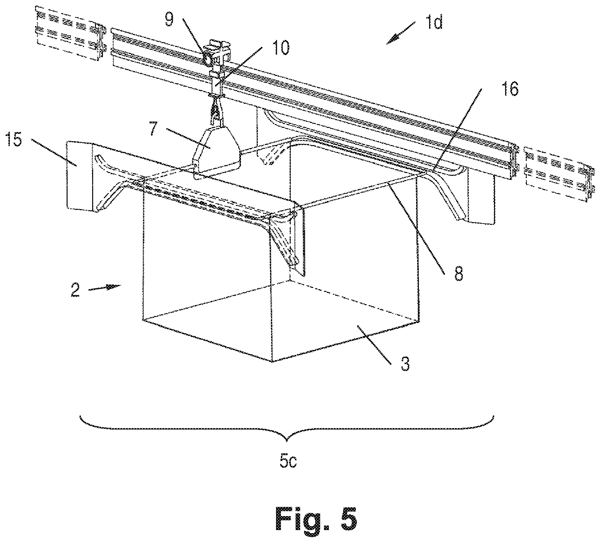

Fig. 5 zeigt nun ein Hängefördersystem 1d mit einer Beladestation 5c, welche eine Betätigungsvorrichtung 15 umfasst, durch welche der Taschenkörper 3 von der Transportstellung in die Beladestellung und von der Beladestellung in die Transportstellung verstellbar ist. Auf diese Weise kann der Beladevorgang teilweise oder vollständig automatisiert werden. Für den Umstellvorgang gleitet das Rahmengestell 8 der Hängetasche 2 entlang einer Kulissenführung 16 der Betätigungsvorrichtung 15 wodurch die Umstellung aus der Transportstellung in die Beladestellung und umgekehrt bewirkt wird. Die Fig. 5 zeigt den Taschenkörper 3 dabei in der Beladestellung.

Bei der Betätigungsvorrichtung 15 erfolgt die Umstellung zwischen Transportstellung und Beladestellung während der Bewegung der Hängetasche 2. Denkbar ist aber auch, dass die Hängetasche 2 in einer Beladeposition angehalten wird und danach der Taschenkörper 3 durch eine andere Betätigungsvorrichtung, beispielweise durch einen Schwenkrahmen oder einen Beladeroboter, von der Transportstellung in die Beladestellung umgestellt wird (also geöffnet wird) oder von der Beladestellung in die Transportstellung umgestellt wird (also geschlossen wird).

Wenngleich das Umstellen des Taschenkörpers 3 zwischen der Transportstellung und der Beladestellung bevorzugt automatisch erfolgt, kann dies auch manuell erfolgen. Beispielsweise kann das Rahmengestell 8 einer in der Beladestation 5a..5c bereitgestellten Hängetasche 2 manuell verschwenkt werden, sodass der Taschenkörper 3 aus der Transportstellung in die Beladestellung umgestellt wird oder von der Beladestellung in die Transportstellung.

In den bis jetzt offenbarten Beispielen ist der Taschenkörper 3 mit seinen Enden an einem (einzigen) Transportträger 10 auf einer Hängefördervorrichtung 6 aufgehängt. Denkbar ist aber auch, dass der Taschenkörper 3 mit seinen Enden an zwei Transportträgern 10 auf einer Hängefördervorrichtung 6 aufgehängt ist (nicht dargestellt). In diesem Fall ist ein Umstellen von der Transportstellung in die Beladestellung beispielsweise dadurch möglich, dass der Abstand zwischen den beiden Transportträgern 10 vergrößert wird. Zum Umstellen von der Beladestellung in die Transportstellung wird der Abstand zwischen den beiden Transportträgern 10 dagegen entsprechend verringert.

An dieser Stelle wird angemerkt, dass die oben offenbarten Varianten zum Umstellen des Taschenkörpers zwischen der Beladestellung und der Transportstellung beliebig mit den Hängefördersystemen 1a..1c der Fig. 1 bis 4 anwendbar sind. Auch die Merkmale der Hängefördersysteme 1a..1c der Fig. 1 bis 4 sind beliebig untereinander kombinierbar.

Die Fig. 6 zeigt nun eine schematische Darstellung eines beispielhaften Lager- und Kommissioniersystems 17 in Draufsicht.

Konkret sind eine Beladestation 5d, ein Hängetaschenlager 18, eine Umladestation 19, ein Liegewarenlager 20 und eine Kommissionierstation 21 in einem Gebäude 22 untergebracht. Das Gebäude 22 weist zudem zwei Gebäudeöffnungen 23 und 24 auf, welche als Wareneingang und/oder Warenausgang fungieren können.

Die Beladestation 5d kann einen ersten Roboter 25a, eine erste Andienposition auf einer Liegeförderbahn 26a und eine zweite Andienposition auf einer Hängefördervorrichtung 6a umfassen. Auf der Liegeförderbahn 26a sind beispielhaft mehrere Waren 4a..4d angeordnet. Die Waren 4c und 4d liegen dabei in einem Liegewaren-Ladehilfsmittel 27a, die Waren 4a und 4b liegen lose (das heißt, ohne Liegewaren-Ladehilfsmittel 27a) auf der Liegeförderbahn 26a. Die Liegeförderbahn 26a führt von der Gebäudeöffnung 23 zum ersten Roboter 25a, und die Hängefördervorrichtung 6a führt vom ersten Roboter 25a zum Hängetaschenlager 18, das mehrere Hängefördervorrichtungen 6b umfasst. Über die Hängefördervorrichtung 6a des Hängefördersystems des Lager- und Kommissioniersystems 17 ist die Beladestation 5d also mit dem Hängetaschenlager 18 fördertechnisch verbunden.

Im Bereich der Beladestation 5d ist eine erste Messeinrichtung 11c angeordnet, und außerhalb der Beladestation 5d, unmittelbar vor den Hängefördervorrichtungen 6b des Hängetaschenlagers 18, befindet sich eine optionale zweite Messeinrichtung 11d. Die beiden Messeinrichtungen 11c und 11d können beispielsweise als Kamera oder Lichtgitter ausgeführt sein.

Auf den Hängefördervorrichtungen 6b des Hängetaschenlagers 18, die überwiegend der Lagerung, jedoch auch dem Transport dienen, sind beispielhaft einige Hängetaschen 2a..2c dargestellt. Die Hängetasche 2c ist dabei um 90° in die Zeichenebene gedreht gezeichnet, um die darin gelagerter Ware 4e darstellen zu können. Natürlich hängt die Hängetasche 2c in der Realität wie die Hängetaschen 2a, 2b nach unten. Vom Hängetaschenlager 18 führt eine Hängefördervorrichtung 6c zur Umladestation 19. Die Umladestation 19 kann einen zweiten Roboter 25b, eine erste Andienposition auf der Hängefördervorrichtung 6c und eine zweite Andienposition auf einer Liegeförderbahn 26b umfassen, wobei letztere vom zweiten Roboter 25b der Umladestation 19 zum Liegewarenlager 20 führt.

An der ersten Andienposition der Umladestation 19 befindet sich im gezeigten Beispiel eine Hängetasche 2d mit einer darin gelagerten Ware 4f. Die Hängetasche 2d ist, wie die Hängetasche 2c, der besseren Darstellbarkeit halber in die Zeichenebene gedreht gezeichnet. An der zweiten Andienposition der Umladestation 19 befindet sich im gezeigten Beispiel ein Liegewaren-Ladehilfsmittel 27b mit einer darin gelagerten Ware 4g.

Das Liegewarenlager 20 umfasst in diesem Beispiel mehrere Lagerregale 28 mit jeweils mehreren Lagerplätzen, sowie Regalbediengeräte 29a und 29b, die in zwischen den Lagerregalen 28 verlaufenden Regalgassen verfahren. Am oberen Ende der Regalgassen sind zwei Liegeförderbahnen 26c, 26d angeordnet, die vom Liegewarenlager 20 zur Kommissionierstation 21 führen.

Die Kommissionierstation 21 kann einen dritten Roboter 25c, eine erste Andienposition auf der Liegeförderbahn 26c, eine zweite Andienposition auf der Liegeförderbahn 26d und eine dritte Andienposition auf einer Liegeförderbahn 26e umfassen, wobei letztere den dritten Roboter 25c mit der Gebäudeöffnung 24 verbindet.

Weiterhin ist in der Fig. 6 auch eine Hängefördervorrichtung 6d dargestellt, welche das Hängetaschenlager 18 mit der Kommissionierstation 21 verbindet.

An der zweiten Andienposition auf der Liegeförderbahn 26d befindet sich in diesem Beispiel ein Liegewaren-Ladehilfsmittel 27c, und an der dritten Andienposition auf der Liegeförderbahn 26e befindet sich in diesem Beispiel ein Liegewaren-Ladehilfsmittel 27d mit zwei darin gelagerte Waren 4h, 4i.

In dem in Fig. 6 dargestellten Lager- und Kommissioniersystem 17 befinden sich weiterhin mehrere autonome Flurförderfahrzeuge 30a..30d mit darauf transportierten Liegewaren-Ladehilfsmitteln 27a..27g. Die autonomen Flurförderfahrzeuge 30a und 30b befinden sich dabei konkret zwischen der Beladestation 5d und der Umladestation 19, und die autonomen Flurförderfahrzeuge 30c und 30d befinden sich zwischen der Beladestation 5d und der Kommissionierstation 21.

Auf den Hängefördervorrichtungen 6a..6d des in der Fig. 6 dargestellten Lager- und Kommissioniersystems 17 können zusätzlich oder alternativ zu den dargestellten Hängetaschen 4a..4c auch Hängewaren (ohne Hängetaschen) transportiert werden. Demzufolge kann das Hängetaschenlager auch die Funktion eines Hängewarenlagers übernehmen

Die Funktion des in der Fig. 6 dargestellten Lager- und Kommissioniersystems 17 ist wie folgt:
Über die Gebäudeöffnungen 23 und 24 können Waren 4a..4i angeliefert und im Hängetaschenlager 18 oder im Liegewarenlager 20 eingelagert werden. Waren 4a..4i können aber auch aus dem Hängetaschenlager 18 oder aus dem Liegewarenlager 20 ausgelagert und über die Gebäudeöffnungen 23 und 24 abtransportiert werden.

Die Liegeförderbahnen 26a..26e und die Hängefördervorrichtungen 6a..6d, die Regalbediengeräte 29a, 29b und die autonomen Flurförderfahrzeuge 30a..30d dienen dabei dem Transport der Waren 4a..4i innerhalb des Lager- und Kommissioniersystems 17. Die Roboter 25a..25c dienen dem Umladen von Waren 4a..4i zwischen den verschiedenen Liegeförderbahnen 26a..26e und Hängefördervorrichtungen 6a..6d. Anhand eines illustrativen Beispiels werden die Vorgänge im Lager- und Kommissioniersystem 17 näher beleuchtet.

Beispielsweise können Waren 4a..4d an der Gebäudeöffnung 23 des Lager- und Kommissioniersystems 17 bereitgestellt, auf die Liegeförderbahn 26a abgegeben, und an der ersten Andienposition der Beladestation 5d angedient werden. An der zweiten Andienposition der Beladestation 5d wird eine (leere) Hängetasche 2a..2d angedient. Die Waren 4a..4d werden in Folge vom ersten Roboter 25a von der Liegeförderbahn 26a oder vom Liegewaren-Ladehilfsmittel 27a aufgenommen und in die angediente Hängetasche 2a..2d geladen.

Im Anschluss wird die Ausdehnung/Dicke a des Taschenkörpers 3 in einer beladenen Hängetasche 2a..2d mit Hilfe der ersten Messeinrichtung 11c ermittelt. Dabei können die im Zusammenhang mit den Figuren 1 bis 5 und 7 offenbarten Maßnahmen ergriffen werden. Insbesondere kann die Ausdehnung a des Taschenkörpers 3 mit einem Referenzwert verglichen werden, eine Orientierung einer in die Hängetasche 2a..2d abgelegten Ware 4a..4d mit einer Referenz-Orientierung verglichen werden und/oder in einer Datenbank zugeordnet zu der betreffenden Hängetasche 2a..2d und/oder zugeordnet zu einer Warentype der in der Hängetasche 2a..2d geladenen Ware 4a..4d gespeichert werden.

Mit Hilfe der optionalen zweiten Messeinrichtung 11d kann die Ausdehnung/Dicke a des Taschenkörpers 3 der beladenen Hängetaschen 2a..2d ein weiteres Mal ermittelt werden, um Verlagerungen der Ware 4a..4d während des Transports der Hängetaschen 2a..2d über die Hängefördervorrichtung 6a zu berücksichtigen. Insbesondere kann die ermittelte Ausdehnung a des Taschenkörpers 3 zur Berechnung einer Aufnahmekapazität im Hängetaschenlager 18 herangezogen werden. Beispielsweise kann geprüft werden, ob eine Hängetasche 2a..2d oder wie viele Hängetaschen 2a..2d auf einer Hängefördervorrichtung 6b im Hängetaschenlager 18 aufgenommen werden können. Insbesondere kann dabei auf eine verbleibende freie Länge einer Hängefördervorrichtung 6b Bezug genommen werden, wenn diese bereits teilweise mit Hängetaschen 2a..2d belegt ist, so wie dies in der Fig. 6 der Fall ist. In Folge werden die beladenen Hängetaschen 2a..2d in das Hängetaschenlager 18 transportiert. Mit anderen Worten kann die vorhandene Pufferkapazität auf der Hängefördervorrichtung 6b beziehungsweise im Hängetaschenlager 18 optimal genutzt werden, und auf der jeweiligen Hängefördervorrichtung 6b kann eine maximale Anzahl an befüllten Hängetaschen 2a..2d aufgenommen werden.

In einem weiteren Schritt werden die in den Hängetaschen 2a..2d enthaltenen Waren 4a..4f vom zweiten Roboter 25b der Umladestation 19 von den Hängetaschen 2a..2d in ein Liegewaren-Ladehilfsmittel 27b umgeladen. Dazu wird eine beladene Hängetasche 2a..2d an der ersten Andienposition der Umladestation 19 und ein Liegewaren-Ladehilfsmittel 27b an der zweiten Andienposition der Umladestation 19 angedient. Im Anschluss wird das Liegewaren-Ladehilfsmittel 27b mit den umgeladenen Waren 4a..4f in das Liegewarenlager 20 eingelagert. Dazu wird das Liegewaren-Ladehilfsmittel 27b von der Liegeförderbahn 26b zu einem der beiden Regalbediengeräte 29a, 29b transportiert, von diesem übernommen und in das Lagerregal 28 eingelagert.

Wird ein Kommissionierauftrag zum Kommissionieren von Waren 4a..4g erfasst, so wird ein Liegewaren-Ladehilfsmittel 27b, welches die dem Kommissionierauftrag zugeordnete Waren 4a..4g enthält, mit einem der beiden Regalbediengeräte 29a, 29b aus dem Lagerregal 28 ausgelagert und auf die entsprechende Liegeförderbahnen 26c, 26d übergeben. Mit Hilfe der Liegeförderbahnen 26c, 26d wird die Ware 4a..4g zur ersten oder zweiten Andienposition der Kommissionierstation 21 transportiert und dort angedient. An der dritten Andienposition der Kommissionierstation 21 wird ein Liegewaren-Ladehilfsmittel 27c angedient. In Folge werden die dem Kommissionierauftrag zugeordneten Waren 4a..4g vom dritten Roboter 25c vom Liegewaren-Ladehilfsmittel 27b in das Liegewaren-Ladehilfsmittel 27c geladen. Alternativ oder zusätzlich ist es natürlich auch möglich, dass eine aus dem Hängetaschenlager 18 stammende Ware 4a..4g über die Hängefördervorrichtung 6d zur Kommissionierstation 21 transportiert, dort angedient und in Folge vom dritten Roboter 25c in das Liegewaren-Ladehilfsmittel 27c geladen wird.

In einem weiteren Schritt erfolgt schließlich der Versand der Waren 4a..4i, indem das beladene Liegewaren-Ladehilfsmittel 27c von der Liegeförderbahnen 26e zur Gebäudeöffnung 23 gefördert und von dort abtransportiert wird.

An dieser Stelle wird nochmals darauf hingewiesen, dass das oben ausgeführte Beispiel rein illustrativ ist, und es noch viele weitere Möglichkeiten gibt, wie Waren 4a..4i im Lager- und Kommissioniersystem 17 gehandhabt werden.

Generell werden die Abläufe im Lager- und Kommissioniersystem 17 durch ein zentrales Steuersystem 31 gesteuert. Im gezeigten Beispiel ist eine Funkverbindung zu den Fördervorrichtungen des Lager- und Kommissioniersystems 17 angedeutet, selbstverständlich ist aber auch eine drahtgebundene Kommunikation möglich. Konkrete Ausführungsbeispiele für ein solches zentrales Steuersystem 31 sind ein an sich bekannter Materialflussrechner oder ein an sich bekanntes Warehouse Management System.

In dem in Fig. 6 dargestellten Beispiel ist die Hängefördervorrichtung 6a..6d als stationäre Hängefördervorrichtung ausgebildet. Denkbar ist aber auch, dass die Hängetaschen 2a..2d mit den autonomen Flurförderfahrzeugen 30a..30d transportiert werden, sodass die Hängefördervorrichtung zusätzlich oder alternativ als mobile Hängefördervorrichtung ausgebildet ist. Zur Beförderung der Hängetaschen 2a..2d können die autonomen Flurförderfahrzeuge 30a..30d beispielsweise Hängestangen aufweisen.

Die Roboter 25a..25c sind in dem in Fig. 6 dargestellten Beispiel durch einen Gelenkarmroboter gebildet. Denkbar wäre aber auch, dass ein Teil der Roboter 25a..25c oder alle Roboter 25a..25c durch Portalroboter gebildet sind.

Das Umstellen des Taschenkörpers 3 von der Beladestellung in die Transportstellung oder von der Transportstellung in die Beladestellung kann generell manuell oder automatisch erfolgen. Erfolgt dies automatisch, dann können die Roboter 25a..25c dafür eingesetzt werden. Denkbar ist aber auch, dass in der Beladestation 5d eine Betätigungsvorrichtung 15 nach Art der in der Fig. 5 dargestellten Betätigungsvorrichtung 15 angeordnet ist.

Durch die vorgeschlagenen Maßnahmen ist es möglich, die in einem Hängefördersystem 1a..1d beziehungsweise in einem Lager- und Kommissioniersystem 17 ablaufenden Algorithmen basierend auf den tatsächlichen Abmessungen einer Hängetasche 2, 2a..2d auszuführen, anstatt auf angenommene Abmessungen zurückzugreifen, die in der Regel nicht den Tatsachen entsprechen. Die Planung in einem Hängefördersystem 1a..1d / Lager- und Kommissioniersystem 17 kann daher genauer erfolgen, und die Wahrscheinlichkeit für Störungen kann auf diese Weise deutlich reduziert werden.

Abschließend wird festgehalten, dass der Schutzbereich durch die Patentansprüche bestimmt ist. Die Beschreibung und die Zeichnungen sind jedoch zur Auslegung der Ansprüche heranzuziehen. Die den eigenständigen erfinderischen Lösungen zugrundeliegende Aufgabe kann der Beschreibung entnommen werden.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1a..1d: Hängefördersystem
- 2, 2a..2d: Hängetasche
- 3: Taschenkörper
- 3': Seitenwandanschlag des Taschenkörpers
- 4, 4a..4i: Ware
- 5a..5d: Beladestation

- 6, 6a..6d: Hängefördervorrichtung
- 7: Hängeträger
- 8: Rahmengestell
- 9: Rolle
- 10: Transportträger (Laufwagen)

- 11a..11d: Messeinrichtung
- 12: Schwingungsberuhigungsvorrichtung (Besen- oder Bürstenleiste)
- 13: Ausgabeeinheit (Bildschirm)
- 14: Positioniervorrichtung (Wand)
- 15: Betätigungsvorrichtung

- 16: Kulissenführung
- 17: Lager- und Kommissioniersystem
- 18: Hängetaschenlager
- 19: Umladestation
- 20: Liegewarenlager

- 21: Kommissionierstation
- 22: Gebäude
- 23: Gebäudeöffnung
- 24: Gebäudeöffnung
- 25a..25c: Roboter

- 26a..26e: Liegeförderbahn
- 27a..27g: Liegewaren-Ladehilfsmittel
- 28: Lagerregal
- 29a, 29b: Regalbediengerät
- 30, 30a..30d: autonomes Flurförderfahrzeug
- 31: zentrales Steuersystem des Lager- und Kommissioniersystems

- a: Ausdehnung/Dicke des Taschenkörpers

## Patentansprüche

1. Hängefördersystem (1a..1d), umfassend
- Hängetaschen (2, 2a..2d), welche jeweils einen zwischen einer Transportstellung und einer Beladestellung umstellbaren Taschenkörper (3) aus einem biegeschlaffen Material umfassen und zum Transport von Waren (4, 4a..4i) ausgebildet sind,
- eine Beladestation (5a..5d), welche eine Betätigungsvorrichtung (15) umfasst, durch welche der Taschenkörper (3) von der Transportstellung in die Beladestellung und von der Beladestellung in die Transportstellung verstellbar ist, und an welcher eine Hängetasche (2, 2a..2d) mit einer Ware (4, 4a..4i) beladen werden kann, wenn sich der Taschenkörper (3) in der Beladestellung befindet,
- eine Hängefördervorrichtung (6, 6a..6d) zum Antransport einer Hängetasche (2, 2a..2d) in die Beladestation (5a..5d) und zum Abtransport der Hängetasche (2, 2a..2d) aus der Beladestation (5a..5d),
**gekennzeichnet durch**
- eine Messeinrichtung (11a..11d), welche dazu ausgebildet ist, eine Ausdehnung (a) des Taschenkörpers (3) in einer Transportrichtung der beladenen Hängetasche (2, 2a..2d) in der Transportstellung des Taschenkörpers (3) zu ermitteln.

2. Hängefördersystem (1a..1d) nach Anspruch 1, **dadurch gekennzeichnet, dass** die Messeinrichtung (11a.. 1 1d) in der Beladestation (5a..5d) angeordnet ist.

3. Hängefördersystem (1a..1d) nach Anspruch 1, **dadurch gekennzeichnet, dass** die Messeinrichtung (11a..11d) im Verlauf eines außerhalb der Beladestation (5a..5d) angeordneten Förderabschnitts der Hängefördervorrichtung (6, 6a..6d) angeordnet ist.

4. Hängefördersystem (1a..1d) nach einem der Ansprüche 1 bis 3, **dadurch gekennzeichnet, dass** die Hängetasche (2, 2a..2d)
- einen Hängeträger (7) zum hängenden Transport der Hängetasche (2, 2a..2d) an der Hängefördervorrichtung (6, 6a..6d) und
- ein Rahmengestell (8) umfasst, über das der Taschenkörper (3) an dem Hängeträger (7) hängt und durch welches der Taschenkörper (3) zwischen der Transportstellung und der Beladestellung umstellbar ist.

5. Hängefördersystem (1a..1d) nach einem der Ansprüche 1 bis 4, **dadurch gekennzeichnet, dass** die Hängefördervorrichtung (6, 6a..6d) zum Antransport der Hängetaschen (2, 2a..2d) in die Beladestation (5a..5d) und zum Abtransport der Hängetaschen (2, 2a..2d) aus der Beladestation (5a..5d) Transportträger (10) umfasst, welche durch eine Antriebsvorrichtung bewegbar sind und auf welchen die Hängetaschen (2, 2a..2d) über den Hängeträger (7) aufgehängt sind.

6. Hängefördersystem (1a..1d) nach Anspruch 1, **dadurch gekennzeichnet, dass** der Taschenkörper (3) umfasst
- eine Vorderwand und eine Hinterwand aus biegeschlaffem Material,
- eine an einer ersten Seite des Taschenkörpers (3) zumindest bereichsweise zwischen der Vorder- und Hinterwand ausgebildete Beladeladeöffnung und
- einen an einer zweiten Seite des Taschenkörpers (3) zumindest bereichsweise zwischen der Vorder- und Hinterwand ausgebildeten Seitenwandanschlag, gegen welchen die Ware (4, 4a..4i) anlegbar ist.

7. Hängefördersystem (1a..1d) nach einem der Ansprüche 1 bis 6, **dadurch gekennzeichnet, dass** zusätzlich eine im Bewegungsbereich der Hängetasche (2, 2a..2d) angeordnete Schwingungsberuhigungsvorrichtung (12) vorgesehen ist, welche eine Besen- oder Bürstenleiste umfasst.

8. Hängefördersystem (1a..1d) nach einem der Ansprüche 1 bis 7, **dadurch gekennzeichnet, dass** zusätzlich eine im Bewegungsbereich der Hängetasche (2, 2a..2d) angeordnete Positioniervorrichtung (14) vorgesehen ist, welche eine quer zur Transportrichtung der Hängetasche (2, 2a..2d) ausgerichtete Wand umfasst.

9. Hängefördersystem (1a..1d) nach einem der Ansprüche 1 bis 8, **dadurch gekennzeichnet, dass** die Messeinrichtung (11a..11d) als Kamera oder Lichtgitter ausgebildet ist.

10. Lager- und Kommissioniersystem (17), **gekennzeichnet durch**
- ein Hängefördersystem (1a..1d) gemäß einem der Ansprüche 1 bis 9 und
- ein Hängetaschenlager (18), das über die Hängefördervorrichtung (6, 6a..6d) mit der Beladestation (5a..5d) fördertechnisch verbunden ist.

11. Verfahren zum Ermitteln einer Ausdehnung (a) eines Taschenkörpers (3) einer Hängetasche (2, 2a..2d) eines Hängefördersystems (1a..1d), umfassend die Schritte
- Bereitstellen (101) der Hängetasche (2, 2a..2d) auf einer Hängefördervorrichtung (6, 6a..6d), welche vom Hängefördersystem (1a..1d) umfasst ist,
- Umstellen (103) des Taschenkörpers (3) in eine Beladestellung,
- Beladen (104) der Hängetasche (2, 2a..2d) mit einer Ware (4, 4a..4i) und
- nach dem Beladen Umstellen (105) des Taschenkörpers (3) in eine Transportstellung,
**dadurch gekennzeichnet, dass**
- die Ausdehnung (a) des Taschenkörpers (3) in einer Transportrichtung der beladenen Hängetasche (2, 2a..2d) in der Transportstellung des Taschenkörpers (3) mit Hilfe einer Messeinrichtung (11a..11d) ermittelt wird (106, 109).

12. Verfahren nach Anspruch 11, **dadurch gekennzeichnet, dass** die Ausdehnung (a) des Taschenkörpers (3) im Stillstand der Hängetasche (2, 2a..2d) gemessen wird.

13. Verfahren nach Anspruch 11, **dadurch gekennzeichnet, dass** die Ausdehnung (a) des Taschenkörpers (3) gemessen wird, während die Hängetasche (2, 2a..2d) auf der Hängefördervorrichtung (6, 6a..6d) transportiert wird.

14. Verfahren nach einem der Ansprüche 11 bis 13, **dadurch gekennzeichnet, dass** über eine Ausgabeeinheit (13) der Beladestation (5a..5d) eine Anweisung an eine Bedienperson in der Beladestation (5a..5d) oder an einen Beladeroboter (25a..25c) der Beladestation (5a..5d) ausgegeben wird, die in der Hängetasche (2, 2a..2d) geladene Ware (4, 4a..4i) anders in der Hängetasche (2, 2a..2d) abzulegen, wenn die ermittelte Ausdehnung (a) des Taschenkörpers (3) über einem Referenzwert liegt.

15. Verfahren nach einem der Ansprüche 11 bis 14, **dadurch gekennzeichnet, dass** über eine Ausgabeeinheit (13) der Beladestation (5a..5d) eine Anweisung an eine Bedienperson in der Beladestation (5a..5d) oder an einen Beladeroboter (25a..25c) der Beladestation (5a..5d) ausgegeben wird, die in der Hängetasche (2, 2a..2d) geladene Ware (4, 4a..4i) anders in der Hängetasche (2, 2a..2d) abzulegen, wenn eine ermittelte Orientierung einer in die Hängetasche (2, 2a..2d) abgelegten Ware (4, 4a..4i) über einem Schwellwert von einer Referenz-Orientierung abweicht.

16. Verfahren nach einem der Ansprüche 11 bis 15, **dadurch gekennzeichnet, dass** eine ermittelte Ausdehnung (a) des Taschenkörpers (3) in einer Datenbank zugeordnet zu der betreffenden Hängetasche (2, 2a..2d) und/oder zugeordnet zu einer Warentype der in der Hängetasche (2, 2a..2d) geladenen Ware (4, 4a..4i) gespeichert wird.

17. Verfahren nach einem der Ansprüche 11 bis 16, **dadurch gekennzeichnet, dass** eine ermittelte Ausdehnung (a) des Taschenkörpers (3) zur Berechnung einer Aufnahmekapazität in einem Hängetaschenlager (18) oder in einem Hängetaschenpuffer herangezogen wird.

## Claims

1. An overhead conveyor system (1a..1d) comprising
- hanging bags (2, 2a..2d), which each comprise a bag body (3) adjustable between a transport position and a loading position and made of a flexible material, and which are configured for transporting articles (4, 4a..4i),
- a loading station (5a..5d), which comprises an actuation device (15) by means of which the bag body (3) can be adjusted from the transport position into the loading position and from the loading position into the transport position, and at which a hanging bag (2, 2a..2d) may be loaded with an article (4, 4a..4i) when the bag body (3) is in the loading position,
- an overhead conveying device (6, 6a..6d) for transporting a hanging bag (2, 2a..2d) into the loading station (5a..5d) and for transporting the hanging bag (2, 2a..2d) out of the loading station (5a..5d),
**characterized by**
- a measuring device (11a..11d), which is configured to determine an expansion (a) of the bag body (3) in a transport direction of the loaded hanging bag (2, 2a..2d) in the transport position of the bag body (3).

2. The overhead conveyor system (1a..1d) according to claim 1, **characterized in that** the measuring device (11a..11d) is arranged in the loading station (5a..5d).

3. The overhead conveyor system (1a..1d) according to claim 1, **characterized in that** the measuring device (11a..11d) is arranged along a conveying section of the overhead conveying device (6, 6a..6d) arranged outside the loading station (5a..5d).

4. The overhead conveyor system (1a..1d) according to one of claims 1 to 3, **characterized in that** the hanging bag (2, 2a..2d) comprises
- a suspended support (7) for the suspended transport of the hanging bag (2, 2a..2d) on the overhead conveying device (6, 6a..6d), and
- a frame (8), by means of which the bag body (3) is suspended on the suspended support (7) and by which the bag body (3) can be adjusted between the transport position and the loading position.

5. The overhead conveyor system (1a..1d) according to one of claims 1 to 4, **characterized in that** the overhead conveying device (6, 6a..6d) comprises transport carriers (10) for transporting the hanging bags (2, 2a..2d) into the loading station (5a..5d) and for transporting the hanging bags (2, 2a..2d) out of the loading station (5a..5d), which transport carriers (10) are movable by means of a drive device and on which the hanging bags (2, 2a..2d) are suspended via the suspended support (7).

6. The overhead conveyor system (1a..1d) according to claim 1, **characterized in that** the bag body (3) comprises
- a front wall and a rear wall of flexible material,
- a loading opening formed on a first side of the bag body (3) at least in sections between the front and rear wall, and
- a side wall stop which is formed on a second side of the bag body (3) at least in sections between the front and rear wall and against which the article (4, 4a..4i) can be placed.

7. The overhead conveyor system (1a..1d) according to one of claims 1 to 6, **characterized in that** additionally, a swing-calming device (12) is provided, which is arranged in the movement range of the hanging bag (2, 2a..2d) and comprises a broom or brush bar.

8. The overhead conveyor system (1a..1d) according to one of claims 1 to 7, **characterized in that** additionally, a positioning device (14) is provided, which is arranged in the movement range of the hanging bag (2, 2a..2d) and which comprises a wall aligned transversely to the transport direction of the hanging bag (2, 2a..2d).

9. The overhead conveyor system (1a..1d) according to one of claims 1 to 8, **characterized in that** the measuring device (11a..11d) is configured as a camera or a light grid.

10. A storage and picking system (17), **characterized by**
- an overhead conveyor system (1a..1d) according to one of claim 1 to 9, and
- a hanging bag storage (18), which is connected in terms of conveyance to the loading station (5a..5d) via the overhead conveying device (6, 6a..6d).

11. A method for determining an expansion (a) of a bag body (3) of a hanging bag (2, 2a..2d) of an overhead conveyor system (1a..1d), comprising the steps
- providing (101) the hanging bag (2, 2a..2d) on an overhead conveying device (6, 6a..6d), which is comprised by the overhead conveyor system (1a..1d),
- adjusting (103) the bag body (3) into a loading position,
- loading (104) the hanging bag (2, 2a..2d) with an article (4, 4a..4i), and
- after loading, adjusting (105) the bag body (3) into a transport position, **characterized in that**
- the expansion (a) of the bag body (3) in a transport direction of the loaded hanging bag (2, 2a..2d) is determined (106, 109) in the transport position of the bag body (3) with the aid of a measuring device (11a..11d).

12. The method according to claim 11, **characterized in that** the expansion (a) of the bag body (3) is measured during a standstill of the hanging bag (2, 2a..2d).

13. The method according to claim 11, **characterized in that** the expansion (a) of the bag body (3) is measured while the hanging bag (2, 2a..2d) is transported on the overhead conveying device (6, 6a..6d).

14. The method according to one of claims 11 to 13, **characterized in that** an output unit (13) of the loading station (5a..5d) is used to output an instruction to an operator in the loading station (5a..5d) or to a loading robot (25a..25c) of the loading station (5a..5d), to place the article (4, 4a..4i) loaded in the hanging bag (2, 2a..2d) differently in the hanging bag (2, 2a..2d) if the determined expansion (a) of the bag body (3) exceeds a reference value.

15. The method according to one of claims 11 to 14, **characterized in that** an output unit (13) of the loading station (5a..5d) is used to output an instruction to an operator in the loading station (5a..5d) or to a loading robot (25a..25c) of the loading station (5a..5d), to place the article (4, 4a..4i) loaded in the hanging bag (2, 2a..2d) differently in the hanging bag (2, 2a..2d) if a determined orientation of an article (4, 4a..4i) placed into the hanging bag (2, 2a..2d) deviates from a reference orientation beyond a threshold value.

16. The method according to one of claims 11 to 15, **characterized in that** a determined expansion (a) of the bag body (3) is stored in a database, assigned to the corresponding hanging bag (2, 2a..2d) and/or assigned to a type of the article (4, 4a..4i) loaded in the hanging bag (2, 2a..2d).

17. The method according to one of claims 11 to 16, **characterized in that** a determined expansion (a) of the bag body (3) is used for calculating a receiving capacity in a hanging bag storage (18) or in a hanging bag buffer.

## Revendications

1. Système de convoyeur à suspension (1a... 1d) comprenant
- des poches suspendues (2, 2a... 2d) qui comprennent chacune un corps de poche (3) pouvant être commutée entre une position de transport et une position de chargement, en matériau souple, et qui sont conçues pour le transport de marchandises (4, 4a... 4i),
- une station de chargement (5a... 5d) qui comprend un dispositif d'actionnement (15) à l'aide duquel le corps de poche (3) peut être déplacé de la position de transport vers la position de chargement et de la position de chargement vers la position de transport, et au niveau de laquelle une poche suspendue (2, 2a... 2d) peut être chargée avec une marchandise (4, 4a... 4i) lorsque le corps de poche (3) se trouve dans la position de chargement,
- un dispositif de convoyeur à suspension (6, 6a... 6d) pour le transport d'une poche suspendue (2, 2a... 2d) vers la station de chargement (5a... 5d) et pour le transport de la poche suspendue (2, 2a... 2d) hors de la station de chargement (5a... 5d),
**caractérisé par**
- un dispositif de mesure (11a... 11d) qui est conçu pour déterminer une extension (a) du corps de poche (3) dans une direction de transport de la poche suspendue (2, 2a... 2d) chargée dans la position de transport du corps de poche (3).

2. Système de convoyeur à suspension (1a... 1d) selon la revendication 1, **caractérisé en ce que** le dispositif de mesure (11a... 11d) est disposé dans la station de chargement (5a... 5d).

3. Système de convoyeur à suspension (1a... 1d) selon la revendication 1, **caractérisé en ce que** le dispositif de mesure (11a... 11d) est disposé dans le tracé d'une portion de convoyage du dispositif de convoyeur à suspension (6, 6a... 6d), disposée à l'extérieur de la station de chargement (5a... 5d).

4. Système de convoyeur à suspension (1a... 1d) selon l'une des revendications 1 à 3, **caractérisé en ce que** la poche suspendue (2, 2a... 2d) comprend
- un support suspendu (7) pour le transport suspendu de la poche suspendue (2, 2a... 2d) au niveau du dispositif de convoyeur à suspension (6, 6a... 6d) et
- un châssis (8) à l'aide duquel le corps de poche (3) est suspendu au support à suspension (7) et à l'aide duquel le corps de poche (3) peut être commuté entre la position de transport et la position de chargement.

5. Système de convoyeur à suspension (1a... 1d) selon l'une des revendications 1 à 4, **caractérisé en ce que** le dispositif de convoyeur à suspension (6, 6a... 6d) pour le transport d'une poche suspendue (2, 2a... 2d) vers la station de chargement (5a... 5d) et pour le transport de la poche suspendue (2, 2a... 2d) hors de la station de chargement (5a... 5d) comprend des supports de transport (10) qui peuvent être déplacés à l'aide d'un dispositif d'entraînement et sur lesquels les poches suspendues (2, 2a... 2d) sont suspendues à l'aide des supports à suspension (7).

6. Système de convoyeur à suspension (1a... 1d) selon la revendication 1, **caractérisé en ce que** le corps de poche (3) comprend
- une paroi avant et une paroi arrière en matériau souple,
- une ouverture de chargement sur une première face du corps de poche (3), au moins à certains endroits, entre les parois avant et arrière et
- une butée de paroi latérale réalisée sur une deuxième face du corps de poche (3), au moins à certains endroits, entre les parois avant et arrière, contre laquelle la marchandise (4, 4a... 4i) peut être appuyée.

7. Système de convoyeur à suspension (1a... 1d) selon l'une des revendications 1 à 6, **caractérisé en ce que**, en outre, un dispositif anti-vibration (12), disposé dans la zone de déplacement de la poche suspendue (2, 2a... 2d), est prévu, qui comprend une barre à balai ou à brosse.

8. Système de convoyeur à suspension (1a... 1d) selon l'une des revendications 1 à 7, **caractérisé en ce que**, en outre, un dispositif de positionnement (14), disposé dans la zone de déplacement de la poche suspendue (2, 2a... 2d), est prévu, qui comprend une paroi orientée transversalement par rapport à la direction de transport de la poche suspendue (2, 2a... 2d).

9. Système de convoyeur à suspension (1a... 1d) selon l'une des revendications 1 à 8, **caractérisé en ce que** le dispositif de mesure (11a... 11d) est conçu comme une caméra ou une barrière lumineuse.

10. Système de stockage et de préparation de commandes (17), **caractérisé par**
- un système de convoyeur suspendu (1a... 1d) selon l'une des revendications 1 à 9 et
- un dispositif de stockage de poches suspendues (18) qui est relié, à l'aide d'un système de convoyage, par l'intermédiaire du dispositif de convoyeur à suspension (6, 6a... 6d) avec la station de chargement (5a... 5d).

11. Procédé pour la détermination d'une extension (a) d'un corps de poche (3) d'une poche suspendue (2, 2a... 2d) d'un système de convoyeur à suspension (1a... 1d), comprenant les étapes suivantes
- mise à disposition (101) de la poche suspendue (2, 2a... 2d) sur un dispositif de convoyeur à suspension (6, 6a... 6d) qui est inclus dans le système de convoyeur à suspension (1a... 1d),
- passage (103) du corps de poche (3) vers une position de chargement,
- chargement (104) de la poche suspendue (2, 2a... 2d) avec une marchandise (4, 4a... 4i) et
- après le chargement, passage (105) du corps de poche (3) vers une position de transport, **caractérisé en ce que**
- l'extension (a) du corps de poche (3) dans une direction de transport de la poche suspendue (2, 2a... 2d) chargée dans la position de transport du corps de poche (3) est déterminée (106, 109) à l'aide dispositif de mesure (11a... 11d).

12. Procédé selon la revendication 11, **caractérisé en ce que** l'extension (a) du corps de poche (3) est mesurée lorsque la poche suspendue (2, 2a... 2d) est immobilisée.

13. Procédé selon la revendication 11, **caractérisé en ce que** l'extension (a) du corps de poche (3) est mesurée pendant que la poche suspendue (2, 2a... 2d) est transportée sur le dispositif de convoyeur à suspension (6, 6a... 6d).

14. Procédé selon l'une des revendications 11 à 13, **caractérisé en ce que**, par l'intermédiaire d'une unité de sortie (13) de la station de chargement (5a... 5d), une instruction est envoyée à un opérateur dans la station de chargement (5a... 5d) ou à un robot de chargement (25a... 25c) de la station de chargement (5a... 5d), pour déposer autrement la marchandise (4, 4a... 4i) chargée dans la poche suspendue (2, 2a... 2d) lorsque l'extension (a) déterminée du corps de poche (3) se trouve au-dessus d'une valeur de référence.

15. Procédé selon l'une des revendications 11 à 14, **caractérisé en ce que**, par l'intermédiaire d'une unité de sortie (13) de la station de chargement (5a... 5d), une instruction est envoyée à un opérateur dans la station de chargement (5a... 5d) ou à un robot de chargement (25a... 25c) de la station de chargement (5a... 5d), pour déposer autrement la marchandise (4, 4a... 4i) chargée dans la poche suspendue (2, 2a... 2d) lorsque l'orientation déterminée d'une marchandise (4, 4a... 4i) déposée dans la poche suspendue (2, 2a... 2d) passe au-dessus d'une valeur seuil d'une orientation de référence.

16. Procédé selon l'une des revendications 11 à 15, **caractérisé en ce que** l'extension (a) déterminée du corps de poche (3) est enregistrée dans une base de données de manière correspondante à la poche suspendue (2, 2a... 2d) concernée et/ou de manière correspondante au type de la marchandise (4, 4a... 4i) chargée dans la poche suspendue (2, 2a... 2d).

17. Procédé selon l'une des revendications 11 à 16, **caractérisé en ce que** l'extension (a) déterminée du corps de poche (3) est utilisée pour calculer une capacité de stockage dans un dispositif de stockage de poches suspendues (18) ou dans un tampon de stockage de poches suspendues.
